(19) Europäisches Patentamt
European Patent Office
Office européen des brevets

(11) **EP 1 925 130 B1**

(12) **EUROPEAN PATENT SPECIFICATION**

(45) Date of publication and mention
of the grant of the patent:
**04.11.2009 Bulletin 2009/45**

(51) Int Cl.:
***H04W 84/18*** *(2009.01)*

(21) Application number: **06740189.3**

(22) Date of filing: **30.03.2006**

(86) International application number:
**PCT/US2006/011895**

(87) International publication number:
**WO 2007/040610 (12.04.2007 Gazette 2007/15)**

(54) **METHOD OF BEACON MANAGEMENT FOR MERGING PICONETS**

VERFAHREN ZUR BAKENVERWALTUNG ZUM ZUSAMMENLEGEN VON PICONETS

PROCEDE DE GESTION DE BALISES POUR LA FUSION DE PICONETS

(84) Designated Contracting States:
**DE**

(30) Priority: **14.09.2005 US 717111 P**

(43) Date of publication of application:
**28.05.2008 Bulletin 2008/22**

(73) Proprietor: **Panasonic Corporation
Kadoma-shi
Osaka 571-8501 (JP)**

(72) Inventors:
• **MO, Shaomin, Samuel
c/o Matsushita Electric Industrial Co., Ltd.,
Intellectual Prop. Rights Operat. Co.
2-1-61 Shiromi Chuo-ku, Osaka-shi,
OSAKA 540-6207 (JP)**
• **VISHNEVSKY, Vladimir, M.
Moscow, 117418 (RU)**
• **LYAKHOV, Andrey, I.
Moscow, 115573 (RU)**
• **SAFONOV, Alexander, A.
Doloprudny, Moscow Region, 141700 (RU)**

(74) Representative: **Schwabe - Sandmair - Marx
Patentanwälte
Stuntzstrasse 16
81677 München (DE)**

(56) References cited:
**WO-A-2005/076543**

• **HIERTZ G R ET AL: "Multiband OFDM Alliance - The next generation of Wireless Personal Area Networks" 18 April 2005 (2005-04-18), ADVANCES IN WIRED AND WIRELESS COMMUNICATION, 2005 IEEE/SARNOFF SYMPOSIUM ON PRINCETON, NEW JERSEY, USA APRIL 18-19, 2005, PISCATAWAY, NJ, USA, IEEE, PAGE(S) 1-7 , XP002329982 ISBN: 0-7803-8854-2 chapter "III. NEXT GENERATION WPAN MAC"**
• **"Standard ECMA-368 1st Edition; High Rate Ultra Wideband PHY and MAC Standard" [Online] December 2005 (2005-12), ECMA INTERNATIONAL , XP007900963 Retrieved from the Internet: URL:http://www.ecma-international.org/publ ications/files/ECMA-ST/ ECMA-368.pdf> [retrieved on 2006-08-09] pages 190-193, chapter "17.2.6 Merger of multiple BPs"**
• **CHUN-TING CHOU ET AL: "Mobility support enhancements for the wimedia UWB MAC protocol" 3 October 2005 (2005-10-03), BROADBAND NETWORKS, 2005 2ND INTERNATIONAL CONFERENCE ON BOSTON, MA OCT. 3-7, 2005, PISCATAWAY, NJ, USA,IEEE, PAGE(S) 213-219 , XP010890344 ISBN: 0-7803-9276-0 chapters III, IV, V**

**Description**

FIELD OF THE INVENTION

This invention relates to a method of communications and, more particularly, to a method of beacon management for improved merging of piconets.

BACKGROUND OF THE INVENTION

Wireless Personal Area Networks (WPANs) are being used for short-range connectivity for audio/video devices in the home environment as a new wireless technology.

Peer-to-peer (P2P) networks tend to be self configuring, making system setting simple and easy. A distributed P2P WPAN is a network having a network architecture in which there is no central controller for resource management or timing maintenance. In this WPAN, every device transmits its own beacon. Each device in the network has a dedicated beacon slot and each device indicates beacon slots of the other devices into its beacon. A major advantage of such a network is that the network effectively avoids single node failures. In a centrally managed network, for example, if the central controller malfunctions the entire network malfunctions. Because a distributed network architecture allows avoiding single node failures, it has become favored for Consumer Electronics (CEs) systems used for home networks.

Beacon management in such networks, however, is problematic, in particular, because devices in different P2P WPANs (also known as piconets) can affect each other. Piconets can move into and out of range of each other, for example, due to changes in the propagation environment, mobility, or other effects. This may cause collisions between beacons of different devices on different piconets, collisions between beacons of one device on one piconet and data packets of another device on a different piconet, or collisions between data packets of different devices on different piconets. Therefore, even if they are not going to communicate with each other, piconets typically synchronize, for example, by merging different piconets into a single piconet.

SUMMARY OF THE INVENTION

The present invention is embodied in a method for synchronizing communications between first and second piconets. The method includes detecting beacons from the first and second piconets and determining whether superframes corresponding to the first and second piconets are synchronized according to respective beacon period start times from the detected beacons. When the superframes corresponding to the first and second piconets are not synchronized, a type of overlap is determined that corresponds to 1) an overlap between beacon periods, 2) an overlap between reservation periods and 3) an overlap between beacon periods and reservation periods of the superframes corresponding to the first and second piconets. The first and second piconets are merged into a merged piconet according to rules based on the determined type of overlap.

The present invention is further embodied in a method for synchronizing communications between a first piconet and a second piconet where beacons communicated by each piconet are unsynchronized. The method includes detecting by the first piconet an alien superframe of the second piconet and transmitting the beacon of the first piconet to the second piconet during the alien superframe of the second piconet. The method further includes detecting the transmitted beacon by the second piconet and relocating an alien beacon of the second piconet to a beacon period of the first piconet to merge the first piconet and the second piconet into one piconet.

The present invention is further embodied in a method for associating a device with a first piconet or a second piconet. The method includes detecting beacons by the device corresponding to the first piconet and the second piconet and determining whether superframes corresponding to the first and second piconets are synchronized according to respective beacon period start times from the detected beacons. When the superframes corresponding to the first and second piconets are not synchronized, a type of overlap is determined corresponding to 1) an overlap between beacon periods, 2) an overlap between reservation periods and 3) an overlap between beacon periods and reservation periods of the superframes corresponding to the first and second piconets. The method further includes merging the device and the first piconet or the second piconet to form a first merged piconet based on whether the corresponding superframes are synchronized or the type of overlap. The method further includes merging the remaining devices of an unmerged piconet into the first merged piconet to form a second merged piconet.

BRIEF DESCRIPTION OF THE DRAWINGS

The invention is best understood from the following detailed description when read in connection with the accompanying drawings. It is emphasized that, according to common practice, various features/elements of the drawings may not be drawn to scale. On the contrary, the dimensions of the various features/elements may be arbitrarily expanded or reduced for clarity. Moreover in the drawings, common numerical references are used to represent like features/ elements. Included in the drawing are the following figures:

Fig. 1 (Prior Art) is a timing chart of an exemplary superframe used for communication among a plurality of devices in a communication system;

Figs. 2A, 2B and 2C (Prior Art) are flow charts illustrating a conventional method for merging two piconets;

Fig. 3 (Prior Art) is a timing chart illustrating overlapping beacon periods (BPs) for two exemplary piconets;

Fig. 4 (Prior Art) is a timing chart illustrating non-overlapping BPs for two exemplary piconets;

Fig. 5 (Prior Art) is a data diagram of a Beacon Period Switch Information Element (BP Switch IE) format used in an exemplary communication system;

Fig. 6 is a flow chart illustrating a method for merging two piconets based on a type of overlap, according to an exemplary embodiment of the present invention;

Fig. 7 is a flow chart illustrating a method for merging two piconets based on whether the BPs of the piconets are completely or partially overlapped, according to an exemplary embodiment of the present invention;

Figs. 8A and 8B are flow charts illustrating a method for merging two piconets having BPs that are completely overlapped, according to an exemplary embodiment of the present invention;

Fig. 9 is a flow chart illustrating a method for merging two piconets having BPs that are partially overlapped, according to an exemplary embodiment of the present invention;

Fig. 10 is a timing chart illustrating superframes of two exemplary piconets in which the BP of one piconet is completely overlapped by the distributed reservation protocol (DRP) period of the other piconet;

Figs. 11A, 11B and 11C are timing charts illustrating collision resolution according to an embodiment of the present invention for exemplary piconets;

Fig. 12 is a schematic diagram illustrating an exemplary arrangement of two multihop piconets;

Figs. 13A and 13B are timing charts illustrating collision resolution according to an embodiment of the present invention for exemplary piconets;

Fig. 14 is a schematic diagram illustrating another exemplary arrangement of two multihop piconets;

Figs. 15A, 15B and 15C are timing charts illustrating the merging of superframes for two exemplary piconets;

Fig. 16 is a timing chart illustrating superframes of two exemplary piconets;

Figs. 17A, 17B and 17C are timing charts illustrating the merging of superframes for two exemplary piconets;

Figs. 18A and 18B are timing charts illustrating a superframe of an exemplary piconet with corresponding noise periods;

Figs. 19A and 19B (Prior Art) are timing charts illustrating collision resolution according to the current MBOA MAC specification;

Figs. 20A and 20B are timing charts illustrating collision resolution according to an embodiment of the present invention for exemplary piconets in which some of the devices of each piconet are involved in collisions;

Fig. 21 is a timing chart illustrating a BP of a superframe corresponding to another superframe's DRP reservation period or stable noise that occurs during the beginning portion of the BP;

Fig. 22 is a timing chart illustrating a BP of a superframe corresponding to another superframe's DRP reservation period or, otherwise, stable noise that occurs during an ending portion of the BP;

Fig. 23 is a flow chart illustrating a method for alien BP discovery between two piconets, according to an exemplary embodiment of the present invention;

Fig. 24 is a schematic diagram illustrating two independent piconets with a communication device positioned therebetween to show a procedure for BP association according to an embodiment of the present invention; and

Fig. 25 is a flow chart illustrating a method for BP association of a device positioned between two independent piconets, according to an exemplary embodiment of the present invention.

DETAILED DESCRIPTION OF THE INVENTION

Although the invention is illustrated and described herein with reference to specific embodiments, the invention is not intended to be limited to the details shown. Rather, various modifications may be made in the details within the scope and range of equivalents of the claims and without departing from the invention.

The present invention provides methods for merging piconets. Piconets may be unsynchronized when they come near to each other. The piconets may include an overlap between respective beacon periods (BPs), between respective distributed reservation protocol (DRP) periods or between a BP and a DRP. The present invention determines whether the piconets are unsynchronized and further the type of overlap between the superframes of the piconets. According to the present invention, the piconets merge using rules based on the type of overlap. The present invention further provides a method for two piconets to discover each other in order to improve merging performance and to reduce power consumption. According to a further aspect of the invention, a method for BP association is presented so that a device that is within the vicinity of two independent piconets may merge with an appropriate piconet, based on a type of overlap, and then with the remaining piconet. The present invention provides methods for merging piconets without a loss of connectivity in the case of collisions between or among data packets and/or beacons related to different piconets and for improving the merging performance of these piconets.

One type of P2P WPAN (or piconet) uses Ultra Wide-Band (UWB) signaling based on Orthogonal Frequency Division Multiplexing (OFDM) and, in particular Multi-Band OFDM. This type of P2P WPAN is being advanced by the Multi-Band OFDM Alliance (MBOA). Ultra Wideband (UWB) communication systems, which may include UWB devices are generally known in the art, for example, as illustrated and disclosed in U.S. Application No. 10/751,366 invented by one of the inventors of this application, and entitled "METHOD AND APPARATUS FOR RECOVERING DATA IN A RECEIVED CONVOLUTION-ENCODED DATA STREAM."

Although the present invention is described in terms of UWB communication systems, the present invention may be applied to other communication systems such as non-UWB frequency-hopping and time-hopping communication systems. For example, it is contemplated that embodiments of the present invention may be applicable generally to multi-band communication systems.

The Multiband OFDM Alliance (MBOA) is an industry alliance of companies working to produce certain industry standards/specifications including among others, the current specification of MultiBand OFDM Alliance Media Access Control (MBOA MAC) Specification Draft 0.95, entitled "DISTRIBUTED MEDIUM ACCESS CONTROL (MAC) FOR WIRELESS NETWORKS." This current specification does not clearly specify how piconets merge (as collisions occur), taking into account the temporary loss of connectivity.

The MBOA MAC specification is a distributed organized MAC. In this MAC, there is no central controller for piconet management. Devices from different nearby piconets coordinate themselves using beaconing technology for piconet management. Each device transmits beacons and listens to other devices for their beacons. Beacons form a beacon group. When a device joins an existing beacon group, the device puts its beacon at the end of the beacon group. When a device leaves a beacon group, other devices move their beacons forward to make the beacon group as short as possible. Short beacon groups allow for more time in a superframe to allocate for data exchange.

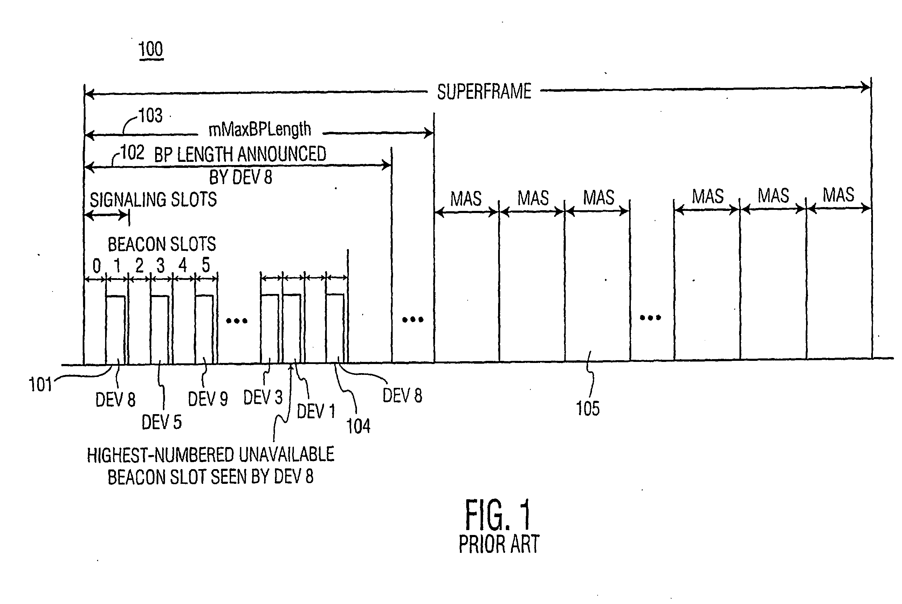

Fig. 1 is a timing chart of an exemplary superframe 100 used for communication among a plurality of devices in a communication system. The basic timing structure for data exchange is a superframe, for example, superframe 100. Superframe 100 comprises (1) a beacon period (BP) 103 that is used to set timing allocations and to communicate management information for the piconet; (2) a priority channel access (PCA) period (not shown) which is a contention-based channel access that is used to communicate commands and/or asynchronous data; and (3) a distributed reservation protocol (DRP) period (not shown), which enables devices to reserve reservation blocks or Media Access Slots (MASs) 105 outside of BP 103 of the superframe 100. Reservations made by a device specifying one or more reservation blocks or MASs 105 that may be used to communicate with one or more other devices. Devices using the DRP for transmission or reception may announce reservations 105 by including DRP Information Elements (IEs) in their beacons.

The beginning of superframe 100 corresponds to a Beacon Period Start Time (BPST) and is different for different piconets. That is, for different piconets, BPSTs are not generally synchronized. Each superframe 100 has a Beacon Period (BP) 103 that starts at the BPST and has a maximum length of mMaxBPLength beacon slots 102 plus an extended window. Beacon slots 104 in the BP 103 are numbered in sequence, starting at 0 and ending at the highest-numbered occupied beacon slot. The BP 103 is shortest when the BP 103 does not have any empty beacon slots 104 (i.e., includes only filled beacon slots 104, the extended window at the end of the BP 103 and signaling slots 101 in the beginning of the BP 103). This type of BP is considered as a well-formed BP.

Before a device transmits any frames (i.e., beacons or data packets), it may scan for beacons for at least one superframe interval. If the device receives no beacon frames during the scan, it may create a new BP and send a beacon in a first beacon slot 104. If the device receives one or more beacons during the scan, the device may not create a new BP, but instead, prior to communicating with another device, it may transmit in the BP 103 a beacon in one of the beacon slots 104 after the highest numbered available beacon slot 104 that is scanned (observed) and within mMaxBPLength of BP 103.

A device in active mode transmits a beacon in the BP 103 and listens for beacons of the other devices in all beacon slots 104 that are specified .by the BP 103 in each superframe 100. A device may desirably find an available (i.e., unused) beacon slot 104 to transmit its beacon. A device desirably may not choose a beacon slot 104 for its beacon transmission, if either the device or the other devices (i.e., neighboring devices on the same piconet) find the beacon slot 104 occupied. A violation of this rule may lead to a beacon collision.

Each device may include in its beacon a Beacon Period Occupancy Information Element (BPOIE) describing a status of each beacon slot 104 in the piconet. In the case of a collision, a corresponding beacon slot 104 may be determined to be "bad." If a device receives from a neighboring device, a beacon with the BPOIE indicating the beacon slot 104 of the device is deemed to be 'bad' for mMaxLostBeacons superframes, the device considers itself to be involved in a collision and resolves the collision by choosing a new beacon slot 104.

For beacon transmission and shifting purposes, a beacon slot is considered available to take if there is no transmission on the slot, or it is not reported as occupied in the BPOIE of any beacon received in the last mMaxLost-Beacons superframes. Each device in the system monitors transmissions over-several superframes to ensure that a device has not skipped its transmission or that the transmission has not been lost. For example, a device may skip a transmission soon after joining a beacon group to ensure that no other device in the group is transmitting during its beacon slot. The variable mMaxLostBeacons is the maximum number of lost beacons in a predetermined interval that can be tolerated by the piconet.

One of many functions of a beacon may include setting up DRP reservations 105 by including a DRP IE in its beacon. Negotiation of a DRP reservation in a MAS 105 may be made by two methods, namely: explicit negotiation or implicit negotiation. For explicit negotiation, the reservation owner and target use DRP reservation request and response command frames to reserve the desired MAS 105. For implicit negotiation, the reservation owner and target use DRP IEs transmitted in their beacons. While a DRP reservation is in effect, the owner and target include DRP IEs in their beacons with the Reservation Status bit set to one to announce the DRP reservation.

According to current practice, if a reservation owner or target does not receive a beacon from the other participant in the reservation for mMaxLostBeacons superframes, it may consider the reservation terminated and remove the corresponding DRP IE from its beacon.

If a device receives a beacon from another device that indicates a common BPST with the other device (i.e., the same BPST as its own BPST), this beacon is referred to as a neighbor beacon and the device is referred to as a neighboring device. Conversely, if a device receives a beacon that indicates a BPST that is not aligned, i.e. unsynchronized, with its BPST, this beacon is referred to as an alien beacon and the device is referred to as an alien device. The BP defined by the BPST and BP length in an alien beacon is referred to as an alien beacon period, or alien BP. When multiple BPs exist, any BP may be considered to be an alien BP to other BPs.

BP Merging based on Overlapping BPs or non-overlapping BPs

Due to changes in a propagation environment of a piconet, the mobility of piconet devices, or other effects such as open/close door effects, devices using two or more unaligned BPSTs may move into communication range with each other (e.g., radio/transmission range). This causes superframes belonging to different piconets to overlap. The current MBOA MAC specification handles overlapping superframes based on two type categories: superframes with overlapping BPs and superframes with non-overlapping BPs. Rules are defined to resolve the overlapping superframes in each case.

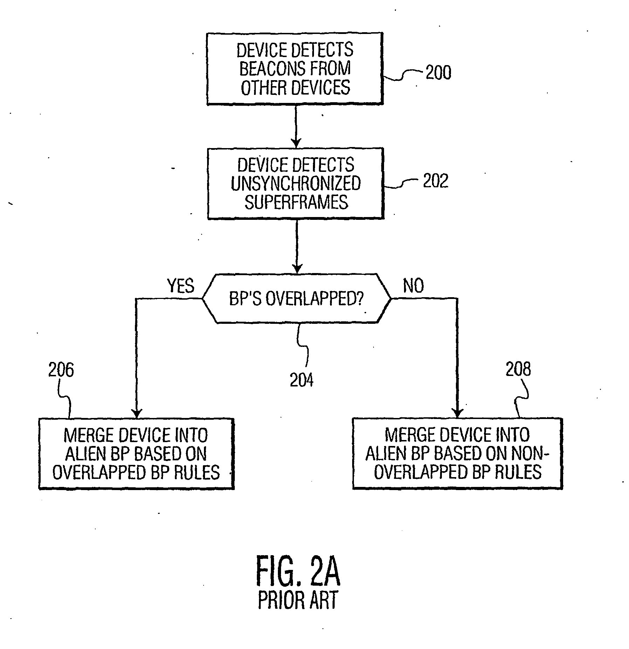

Fig. 2A is a flow chart illustrating a conventional method for merging two piconets. In step 200, a device of one piconet detects an alien beacon from the other piconet. In step 202, the device of piconet detects whether the superframes for piconets A and B are unsynchronized based on the BPSTs of the piconets.

In step 204, it is determined whether the BPs for piconets A and B are overlapped. If the BPs are overlapped, step 204 proceeds to step 206. In step 206, devices in piconets A and B are merged according to rules for overlapped BPs. If the BPs are not overlapped, step 204 proceeds to step 208. In step 208, devices in piconets A and B are merged according to rules for non-overlapped BPs.

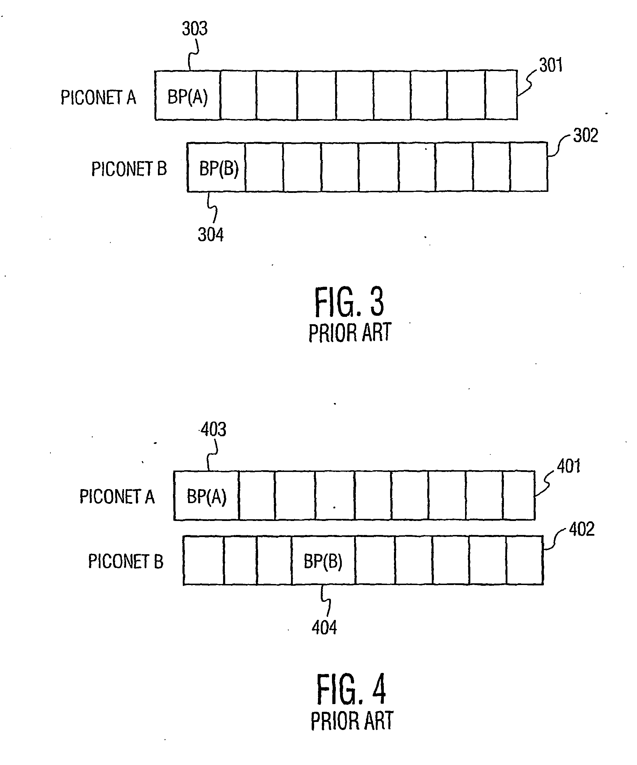

Fig. 3 is a timing chart illustrating overlapping beacon periods for two exemplary piconets A and B. Superframe 301 of piconet A includes beacon period (BP) 303 (hereinafter sometime referred to as BP(A)). Superframe 302 of piconet B includes BP 304 (hereinafter sometime referred to as BP(B)). Certain rules apply in the current MBOA MAC specification when BPs 303 and 304 overlap. These rules apply whether the BPs are partially or completely overlapped.

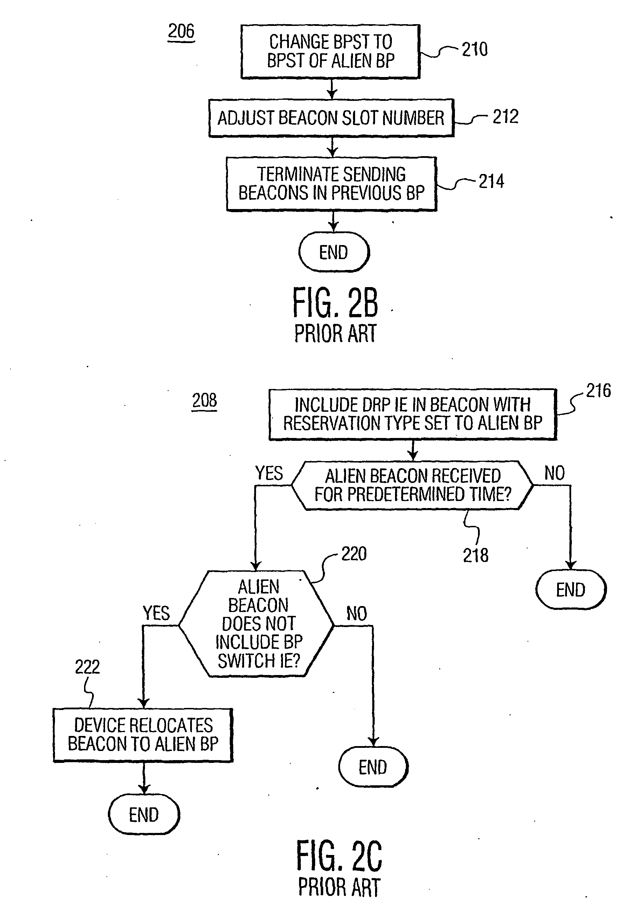

Referring to Fig. 2B, a flowchart is presented to illustrate a conventional method for merging piconets based on overlapped BPs, step 206. For superframes 301 and 302 (Fig. 3) with overlapping BPs 303 and 304, respectively, if the BPST of a device, for example each of the devices on piconet B, falls within an alien BP 303, the device relocates its beacon to the alien BP 203 according to the rules in step 206. In step 210, the device changes its BPST to the BPST of the alien BP 203. In step 212, the device adjusts its beacon slot number such that a new beacon slot number is an existing beacon slot number plus a longest detected alien BP length. Alternatively, in step 212, the device may follow conventional BP joining rules to relocate its beacon to the alien BP 203, i.e. the device may choose its beacon slot at the end of the BP randomly within the extended window, as described in the MBOA MAC specification. In step 214, the device terminates sending further beacons in its previous BP. In this example, BP(B) merges into BP(A).

Fig. 4 is a timing chart illustrating non-overlapping BPs for exemplary piconets A and B. A superframe 401 of piconet A includes BP 403 (denoted by BP(A)) and a superframe 402 of piconet B includes BP 404 (denoted by BP(B)). Certain rules apply in the current MBOA MAC specification when BPs 403 and 404 are non-overlapping.

Referring now to Fig. 2C, a flowchart is presented to illustrate a conventional method for merging piconets based on non-overlapped BPs, step 208. For superframes 401 and 402 (Fig. 4) with non-overlapping BPs 403 and 404, respectively, if a device or merger, for example a device of piconet A, detects an alien BP 404 and the BPs 403 and 404 do not overlap, BPs 403 and 404 may be merged, step 208. The merger of the piconets A and B may be subject to the loss of an alien beacon for up to mMaxLostBeacons superframes (which is the number of superframes after which a beacon is assumed to be lost, i.e., not available). In this case, merging occurs according to the following rules. In step 216, the device includes in its beacon a DRP IE with Reservation Type set to Alien BP for the alien BP 304.

In step 218, it is determined whether an alien beacon is received within a predetermined time. Two cases are discussed separately below. If an alien beacon is not received within the predetermined time, the processing is complete at step 218. If an alien beacon is received within the predetermined time, step 218 proceeds to step 220.

In step 220, it is determined whether a received alien beacon does not include a BP SWITCH IE (described below). If it is determined that a BP SWITCH IE is included, processing is complete at step 220. If it is determined that a BP SWITCH IE is not included, step 220 proceeds to step 222. In step 222, the device relocates its beacon to the alien BP, and the process is complete. In general, a device may relocate to an alien BP at any time except when a beacon received in that alien BP 404 includes a BP Switch IE.

Referring now to specific cases of the predetermined time, if, in step 218, the alien beacon is received for mBPMergeWaitTime superframes (i.e., which is the number of superframes a device waits before merging into an alien piconet), step 218 proceeds to step 220. In this case, the alien BPST corresponds to (i.e., occurs during) the first half of the device's superframe. If, in step 220, no BP Switch IE appears in any received alien beacon, the device relocates its beacon to the alien BP 404, step 222. If, in step 218, an alien beacon is received for mBPMergeWaitTime + mMax-LostBeacons superframes, step 218 proceeds to step 220. If, in step 220, no BP Switch IE appears in any received alien beacon, the device relocates its beacon to the alien BP 404, step 222. In these examples, BP(A) merges into BP(B).

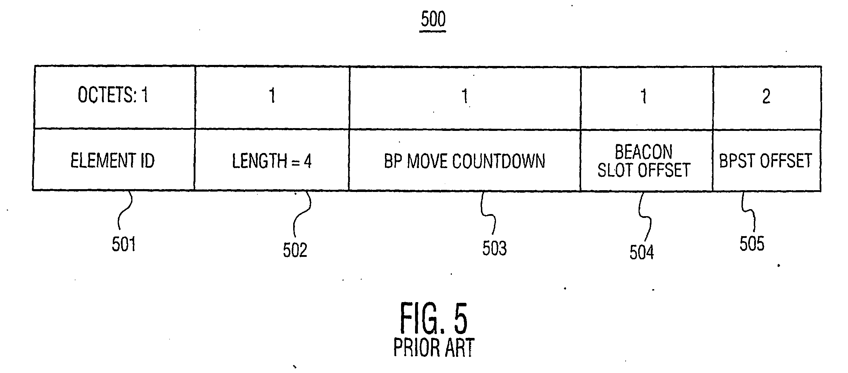

Fig. 5 is a data diagram of a Beacon Period Switch Information Element (BP Switch IE) format used in an exemplary communication system. The format of the BP Switch IE 500 includes an Element ID 501, a Length indicator 502, a BP Move Countdown 503, a Beacon Slot Offset 504 and a BPST Offset 505. A device may include the BP Switch IE 500 in its beacon for mMaxLostBeacons superframes prior to relocating its beacon to the alien BP 404 (Fig. 4). If the BP Switch IE 500 is used, its parameters may be set according to the following rules: (1) the BP Move Countdown field 503 is set to a remaining number of full superframes 402 prior to changing its BPST to that of the alien BP 404 such that in subsequent superframes this field 503 may be decremented by one from the previous value; (2) the BPST Offset field 505 is calculated as a difference between the alien BPST and the BPST of the device; and (3) the Beacon Slot Offset field 504 is set to correspond to at least the highest occupied beacon slot indicated in any beacon received in the alien BP 404 or may be set to zero to indicate the device will join the alien BP 404 using normal joining rules.

If a device receives a beacon in its own beacon group that contains a BP Switch IE 500, it may include a similar BP Switch IE with fields 501-505 set to the corresponding fields of the received Switched IE. If a device receives an alien beacon in BP 404 (Fig. 4) with a BP Switch IE 500 in any superframe, for example superframe 402, that includes a BP Switch IE 500 with the BP Move Countdown field 503 greater than zero, it may halt the relocation process and proceed as if that alien beacon in BP 404 were the first one received. At the end of the superframe 402 in which a device includes the BP Switch IE 500 with a BP Move Countdown field 503 equal to zero, the device adjusts its BPST to align with the next alien BP 404.

However, a problem may exist when two piconets that have well-formed BPs begin to interfere with each other. Two piconets may start out far enough apart from each other so that they do not interfere with each other. Then, due to changes, for example, in the propagation environment, mobility, open/close door effects or other effects, the piconets may come into or move into communication (e.g., radio) range of each other. Overlapping of superframes 301:302 (Fig. 3) or 401:402 (Fig. 4) of piconets A and B may occur when the piconets come into communication range. In such a case, it is probable that piconets A and B are not aligned (synchronized), i.e., the piconets have different BPSTs. In this case, devices in one piconet consider beacons and DRP reservation (in MAS) 105 of the other piconet as alien.

In the current MBOA MAC specification overlapping of two piconets is divided into two categories: (1) the overlapping of BPs, for example as illustrated in Fig. 3; and (2) the non-overlapping of BPs, for example as illustrated in Fig. 4. This implementation can impact efficiency of the merging of the piconets A and B. Moreover, the DRPs 105 do not get enough protection during the merging of these piconets A and B, which may also impair system performance.

DRP Protection

The current MBOA MAC specification provides that if a reservation owner or target does not receive a beacon from the other participant in the reservation for mMaxLostBeacons superframes, it considers the reservation terminated and removes the corresponding DRP IE from its beacon. However, at the same time, collisions are resolved in mMax-LostBeacons superframes. Thus, any collision to BPs may cause termination of all DRPs reserved to the devices involved in a collision.

Moreover, in the case of partial overlapping of BPs, devices resolve collisions, merge into a single piconet and renegotiate their DRP reservation in the newly formed single piconet. When negotiating their reservations, devices in the piconet may get involved in collision in resource request for DRP reservation and resolving these collisions may take some time. Consequently, the entire process may take many superframes to complete. In other cases, collisions or noise may cause the piconets to crash.

To improve DRP protection during BP merging, an embodiment of the present invention includes a MAC parameter mMaxDRPSurvive. That is, a DRP does not terminate before relevant devices receive beacons from participants for more than mMaxDRPSurvive superframes where mMaxDRPSurvive is not less than mMaxLostBeacons +1. This prevents DRPs from early termination, which results in more stable piconets.

BP Emerging based on Type of Overlap

As described herein and illustrated in various Figs. which follow, a BP overlap may be generated by different events such as an alien BP, an alien DRP reservation or noise. It is contemplated that a common procedure used for all of these cases does not result in good performance for each case. Thus, each case may be treated differently. Merging/operational rules for each case may be determined and used to achieve an improved performance. To optimize the performance of the communication system, it is desirable to detect the causes of a BP overlap in order to apply the appropriate rules. Unfortunately, when a BP overlap occurs, an affected device cannot correctly receive beacons from its neighboring devices, which limits the ability of the devices to determine such causes. Thus, it is difficult for such a device to accurately distinguish causes of BP overlap without the assistance of other devices (i.e., collaboration from other devices).

The current MBOA MAC specification does not define collaboration for BP overlap detection. The current specification provides that at the end of a merging procedure the merging device relocates its beacon into the beacon slot with a number equal to its prior beacon slot number plus the value from the Beacon Slot Offset field 504. Because there are mSignalSlotCount slots reserved for signaling slots and because the Highest-Numbered Occupied Beacon Slot (HNOBS) defines a range that includes these signaling slots, the relocation procedure leads to two sets of mSignalSiotCount slots in the new BP (i.e., merged BP): one set in which the msignalSlotCount slots are in the beginning of the new BP and another set in which the mSignalSiotCount-1 slots are in the middle of the new BP. The beginning set functions as signaling slots while the other set (i.e., the set positioned in the middle of the new BP) does not function as signaling slots, but instead, is treated as normal beacon slots. These beacon slots are filled by BP contraction following the BP merge.

Based on the current MBOA specification, as an example, if: (1) piconets A and B are well formed; (2) HNOBS (A) equals 5 and HNOBS(B) equals 2 (i.e., there are 4 devices in piconet A filling beacon slot numbers 2-5 and there is one device in piconet B filling beacon slot number 2); and (3) piconet B merges into piconet A, mSignalSlotCount equals 2, i.e. for each piconet A and B the first slots 0 and 1 are reserved as signaling slots, thus a device from piconet B relocates its beacon to beacon slot number 7 of piconet A. Accordingly, the 6th beacon slot remains empty and BP contraction may thereafter occur to make the BP of piconet A well-formed.

Superframe overlap may be broken into further categories than those identified above; namely: (1) overlapping of two superframes without BPs or DRP reservations overlapping; (2) overlapping of two superframes with overlapping of two BPs, partially or completely, i.e. causing beacon collisions; (3) overlapping of two superframes with overlapping of the BP of one piconet and the DRP reservation of another piconet, i.e. causing beacon collisions; and (4) overlapping of two superframes with overlapping of DRP reservations, but no overlapping of the BPs.

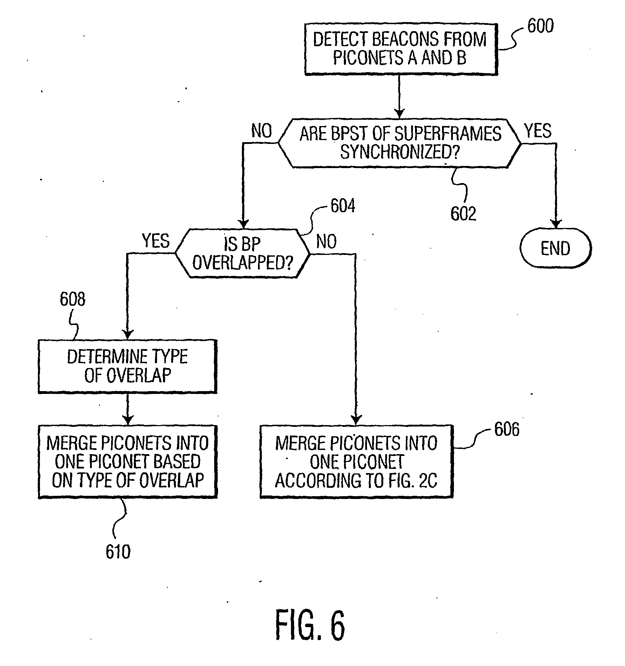

Fig. 6 is a flowchart illustrating a method for merging piconets based on type of overlap, according to an exemplary embodiment of the present invention. In step 600, beacons are detected from piconets A and B. In step 602, it is determined whether the superframes are synchronized based on the BPSTs of the piconets. If the superframes are synchronized, processing is complete at step 602.

In step 604, it is determined whether the BPs of piconets A and B are overlapped. If the BPs of piconets A and B are not overlapped, step 604 proceeds to step 606. In step 606, piconets are merged according to the rules of Fig. 2C. If the BPs of piconets A and B are overlapped, step 604 proceeds to step 608.

In step 608, the type of overlap is determined. The type of overlap can be 1) an overlap between beacon periods, 2) an overlap between. DRP periods and 3) an overlap between beacon periods and DRP periods of the superframes of piconets A and B. In step 610, piconets A and B are merged into one piconet based on the type of overlap determined in step 608.

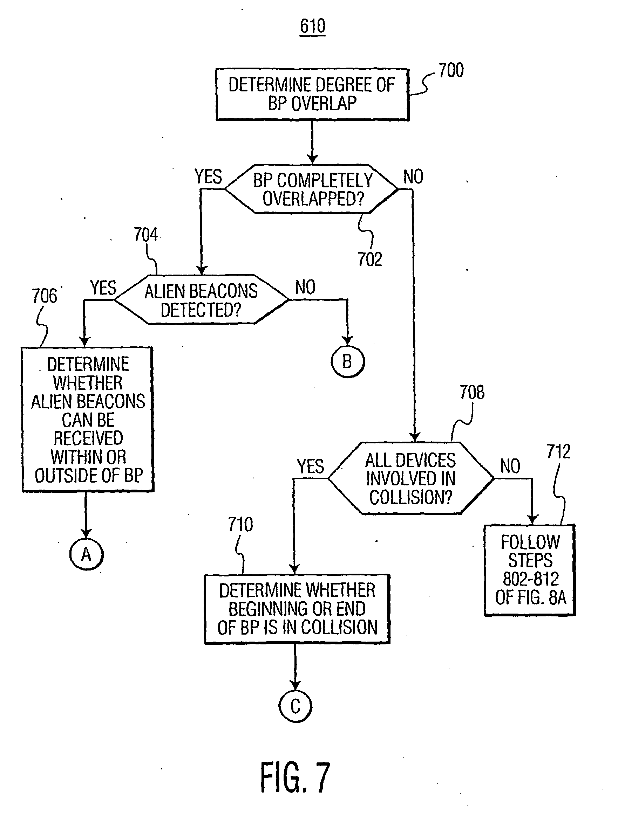

Fig. 7 is a flowchart illustrating a method for merging two piconets based on whether the BPs are completely or partially overlapped, according to an exemplary embodiment of the present invention. In step 700, a degree of the BP overlap is determined. In step 702, it is determined whether the BP is completely overlapped. If the BP is completely overlapped, step 702 proceeds to step 704 for rules based on a completely overlapped BP. If the BP is not completely overlapped, step 702 proceeds to step 708 for rules based on a partially overlapped BP.

BP merging for a completely overlapped BP

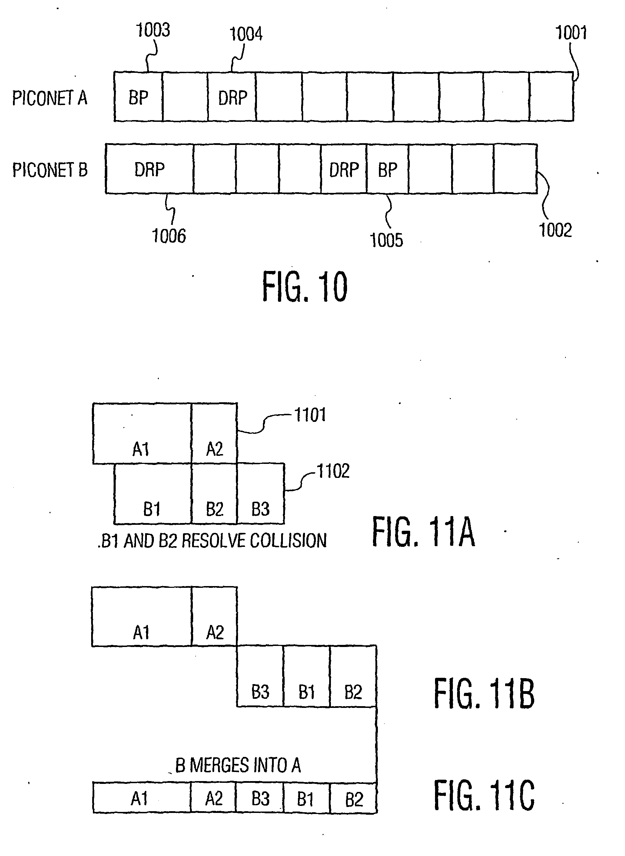

Fig. 10 is a timing chart illustrating superframes of two exemplary piconets A and B in which the BP of piconet A is completely overlapped by the DRP of piconet B. A superframe 1001 of piconet A includes a BP 1003 and a DRP 1004 and a superframe 1002 of piconet B includes a BP 1005 and a DRP 1006. Because BP 1003 of piconet A is overlapped completely, any device in piconet A cannot correctly receive beacons from neighboring devices. Although it is illustrated that the source of overlapping is DRP 1006 of piconet B, it is contemplated that the source of such overlapping may be many sources including BPs and/or DRPs of one or more alien piconets or other effects such as noise.

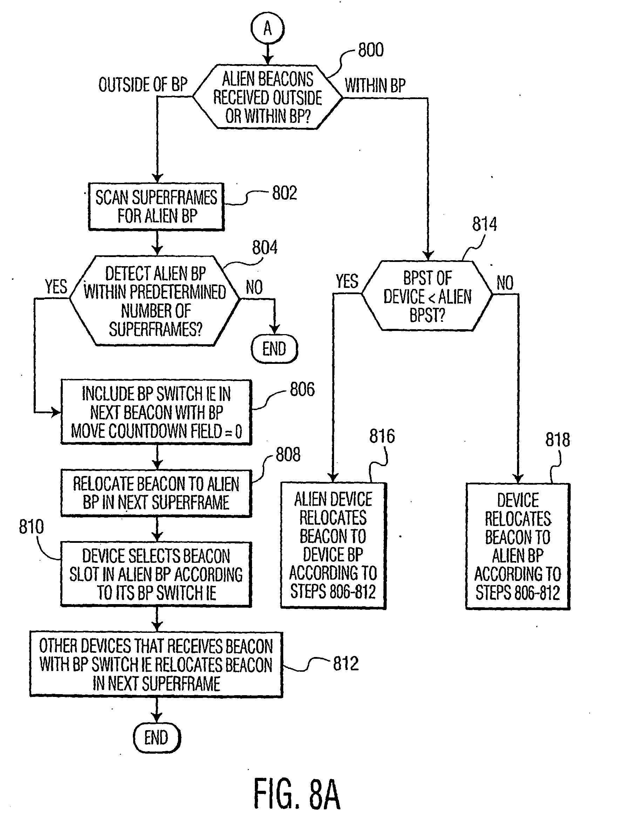

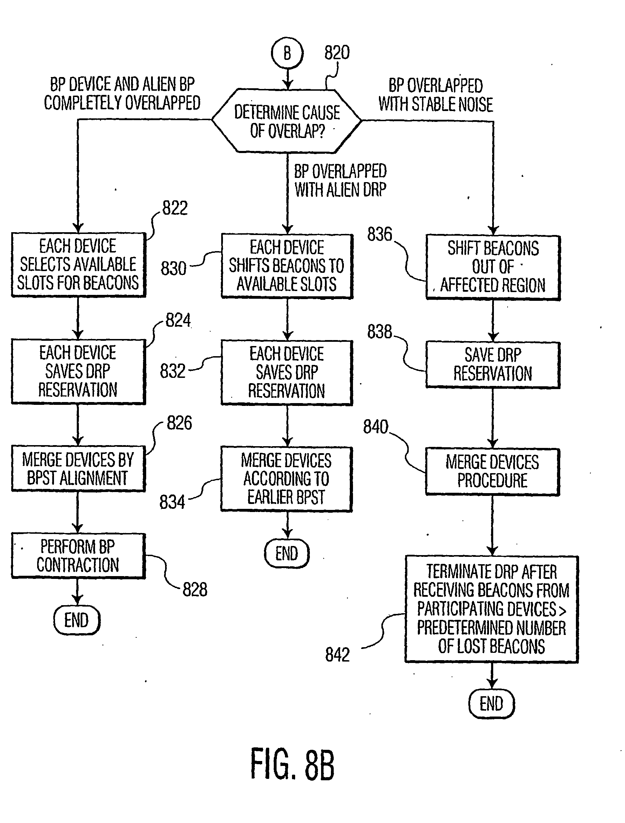

Referring back to Fig. 7, in step 704 it is determined whether alien beacons can be detected. If alien beacons can not be detected, step 704 proceeds to step B shown in Fig. 8B. If alien beacons can be detected, step 704 proceeds to step 706. In step 706, it is determined whether alien beacons can be received within or outside of the BP. Processing then proceeds to Fig. 8A.

Fig. 8A is a flowchart illustrating a method for merging two piconets that are completely overlapped where alien beacons are detected. In step 800, it is determined whether alien beacons are received outside or within the BP. If alien beacons are received outside of the BP, step 800 proceeds to step 802.

Because BP 1003 (Fig. 10) of piconet A is completely covered by DRP 1006 of piconet B, devices in piconet A cannot receive the beacons of neighboring devices in piconet A. If BP 1003 of piconet A is covered completely, the BP 1005 of piconet B is outside the BP 1003 of piconet A (i.e., the highest-numbered occupied beacon slot plus the extended window). Devices from piconet A do not receive either neighboring device beacons (beacons from devices on piconet A) or alien beacons within the BP 1003 of piconet A. However, for such a case, devices of piconet A can detect a physical (PHY) layer communications channel activity (defined herein as PHY activity) on their antennas during BP 1003 of piconet A for mMaxLostBeacons superframes. This corresponds to the case where alien beacons are received outside of the BP.

Referring back to Fig. 8A, when a device in piconet A does not receive either neighboring device beacons or alien device beacons within BP 1003 (Fig. 10) of piconet A, the device may, in step 802, desirably keep scanning up to the end of superframe 1001 and for an additional mMaxLostBeacons-1 superframes for potential alien BPs.

In step 804, it is determined whether an alien BP is found within the extended scanning. If an alien BP is not found, processing is complete at step 804. If an alien BP is found during the extended scanning, step 804 proceeds to step 806. In step 806, the device includes a BP Switch IE 500 in its next beacon, with BP Move Countdown field 503 set to zero, to announce to other devices in piconet A that the device is going to switch its BPST in the next superframe for a multi-hop environment. In a multi-hop environment, each device in a piconet may, for example, operate in an UWB system and may perform frequency-hopping among multiple frequency channels in order to provide a frequency diversity and a robustness against multi-path or fixed frequency interference. Each device desirably includes a different hopping sequence so that multiple devices may operate simultaneously without collision when hopping between the frequency channels.

In step 808, the device relocates its beacon to the alien BP 1005 of piconet B in the next superframe. In step 810, the device chooses a new beacon slot according to its BP Switch IE 500. In step 812, if another device receives a beacon with BP Switch IE 500 having BP Move Countdown field 503 set to zero, it relocates its beacon in the next superframe. For DRP reservations, for example DRP reservation 1004, the devices do not terminate this reservation but, otherwise, recalculate the numbers of reserved MASs, using the known BPST Offset 505. This may prevent the DRP 1004 from early termination and may provide for more stable data connections. The merging procedure takes mMaxLostBeacons+H superframes in H-hop networks, and mMaxLostBeacons+1 superframes for single hop networks, otherwise. The above-identified procedure, steps 802-812, is hereinafter referred to as the BP Switch IE procedure.

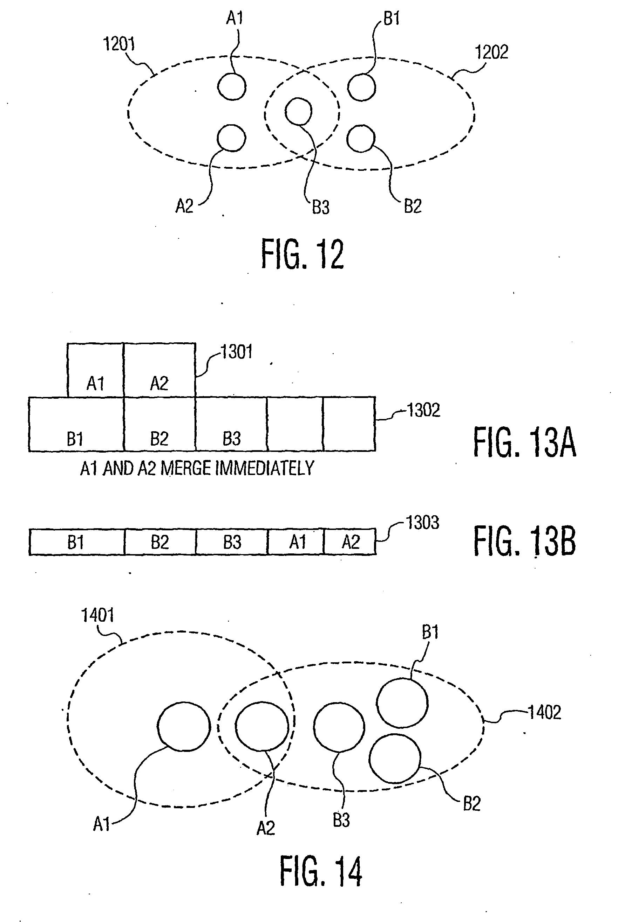

Referring back to Fig. 8A, if alien beacons are received within the BP, step 800 proceeds to step 814. FIGS. 11A-11C, 12, 13A, 3B and 14 illustrate merging operations for two exemplary piconets A and B when alien beacons are received with the BP. More particularly, 11A-11C are timing charts illustrating an exemplary collision resolution according to an embodiment of the present invention for exemplary piconets A and B as they merge into one piconet; Fig. 12 is a schematic diagram illustrating an exemplary arrangement of two multihop piconets A and B; FIGS. 13A and 13B are timing charts illustrating collision resolution according to another embodiment of the present invention for exemplary piconets A and B as they merge into one piconet; and Fig. 14 is a schematic diagram illustrating another exemplary arrangement of two multihop piconets A and B.

Referring now to FIGS. 11A-11C, when the BP 1101 of piconet A is covered by an alien BP 1102 of longer length, devices A1 and A2 in piconet A may not receive beacons of neighboring devices but may receive alien beacons within BP 1101 of piconet A. However, because BP 1101 of piconet A is completely covered by BP 1102 of piconet B, devices B1, B2 and B3 of piconet B cannot receive beacons from piconet A. As a result, devices in piconet B cannot relocate their beacons to piconet A according to the current MBOA MAC specification.

Because beacons from devices A1, A2, B1 and B2 collide, device B3 does not receive any beacons but, otherwise, detects PHY activity in respective beacon slots. Device B3 broadcasts information of the collisions involving these beacon slots in its own beacon group using the BPOIE. Devices B1 and B2 may learn that they are involved in a collision and resolve the collision according to which of the piconets A or B starts earlier (e.g., has a BPST which is earlier).

Devices A1 and A2 (Figs. 11A-C) operate in piconet A and devices B1, B2 and B3 operate in a neighboring piconet B (i.e., within communication range). The BPST of piconet A is earlier than that of piconet B. According to the current MBOA MAC specification, devices B1 and B2 resolve collisions for mMaxLostBeacons superframes and shift their beacons and all devices B1, B2 and B3 then immediately merge into piconet A. This method works well in single-hop networks, but there may be severe problems in a multihop environment.

Referring now to Fig. 12, where only device B3 of piconet B can receive beacons from devices A1 and A2 of piconet A. This is because devices B1 and B2 are outside of communication range of devices A1 and A2. Communication ranges of piconets A and B are illustrated by the dotted lines 1201 and 1202, respectively. In this case, after B1 and B2 resolve the collision, only B3 merges into piconet A, while B1 and B2 become isolated. It takes some time for devices B1 and B2 in searching for BP(A) to merge into piconet A.

Referring back to Fig. 8A, in step 814 it is determined whether the BPST of the device is earlier than the alien BPST. If it is determined that the BPST of the device (of piconet A) is earlier, step 814 proceeds to step 816. In step 816, to reduce the time for merger, device B3 may send a beacon with BP Switch IE 500 before merging, following steps 806-812. After receiving this beacon, devices B1 and B2 may directly merge into piconet A without further BP searching and the merging process completes in two superframes.

Referring now to FIGS. 13A and 13B, devices A1 and A2 operate in piconet A and devices B1, B2 and B3 operate in a neighboring piconet B (i.e., within communication range). The BPST.of BP 1302 in piconet B is earlier than that of BP 1301 in piconet A. According to the current MBOA MAC specification, devices A1 and A2 merge immediately into piconet B. This method works well in single-hop networks, but there may be severe problems in a multihop environment.

Referring now to Fig. 14, only device A2 of piconet A receives beacons from devices B1, B2 and B3 of piconet B. This is because device A1 is outside of communication range of devices B1, B2 and B3. Communication ranges of piconets A and B are illustrated by the dotted lines 1401 and 1402, respectively. If the BPs of piconet A and B are well formed and BP length of piconet B is longer than that of piconet A plus the extended window (where mMaxIdleBeaconSlots equal 8 in the current MBOA MAC specification), only device A2 merges into piconet B, while device A1 becomes isolated because the new beacon slot of device A2 is out of the BP of piconet A. Without being notified, device A1 may deem that device A2 has left the piconet. Devices listen to beacons only in the BP. According to the above example, the BP length of piconet A differs from that of piconet B. If device A2 changes the piconet, i.e. moves to piconet B, device A1 may not hear device A2 because device A2 may transmit its beacon when the BP of A1 is already finished, even though devices A1 and A2 are still within communication range of each other.

Referring back to Fig. 8A, in step 814 it is determined whether the BPST of the device is earlier than the alien BPST. If it is determined that the BPST of the device (of piconet A) is later, step 814 proceeds to step 818. In step 818, To reduce the time for merger, merging device A2 may send a beacon with BP Switch IE 500 before merging, following steps 806-812. After receiving this beacon, device A1 may directly merge into piconet B without further BP searching and the merging process completes in two superframes.

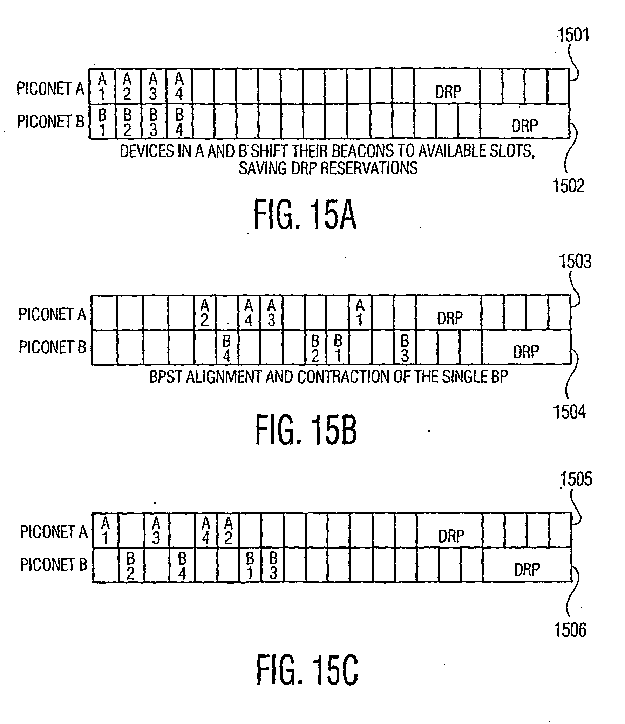

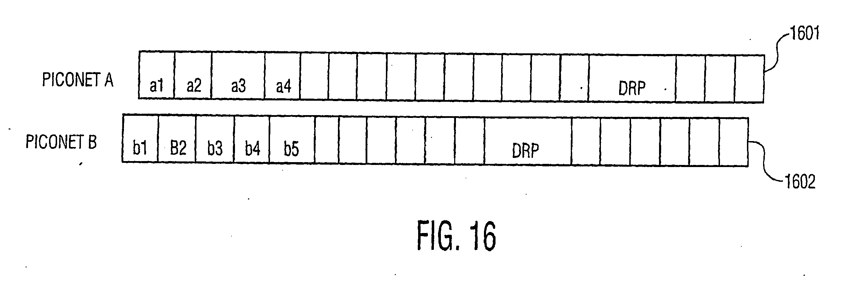

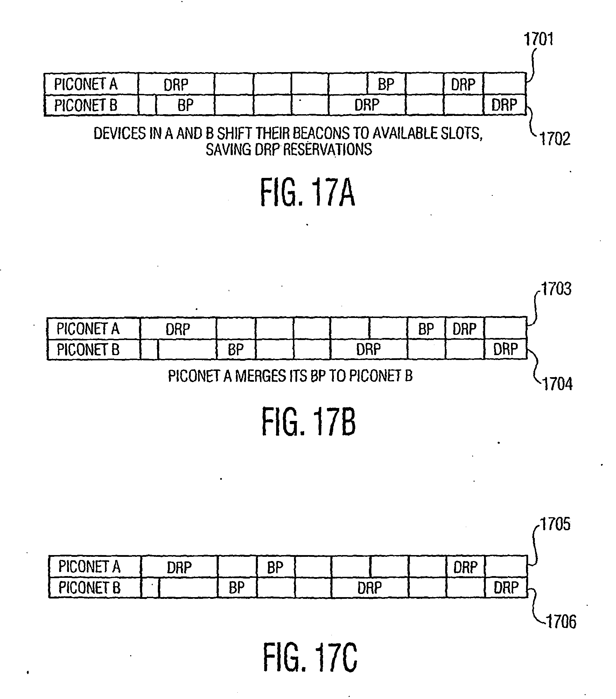

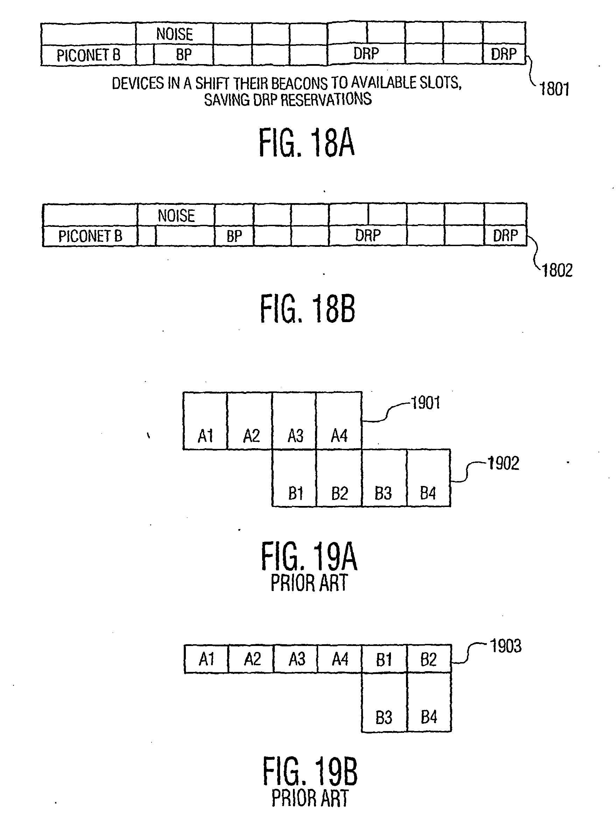

FIGS. 8B, 15A-15C, 16, 17A-17C and 18A-18B illustrate merging operations when devices in piconet A do not receive either beacons of neighboring devices or alien device beacons. More particularly, FIGS 15A-15C and 16 illustrate when the BP of piconet A is covered completely by the BP of piconet B and the BP of piconet B is covered (overlapped) completely by the BP of piconet A. That is, when piconets A and B have either identical BP lengths as shown in Fig. 15A or where the BP lengths differ by only one BP slot as shown in superframes 1601 and 1602 of Fig. 16, the BP of piconets A and B are completely overlapped. Moreover, Fig. 17A-17C illustrates when both piconets A and B are overlapped by the end of alien DRPs, and FIG 18A and 18B illustrates when stable noise overlaps the BP of piconet A.

Fig. 8B is a flowchart illustrating a method for merging when the BP is completely overlapped and no alien beacons are detected. In step 820, the cause of overlap is determined. If the BP of the device and an alien BP are completely overlapped, step 820 proceeds to step 822. If the BP of the device is overlapped with an alien DRP, step 820 proceeds to step 830. If the BP of the device is overlapped with stable noise, step 820 proceeds to step 836.

Referring to FIGS. 15A-15C, piconet A includes superframe 1501 and piconet B includes superframe 1502. Superframe 1503 represents an exemplary superframe after shifting of beacons of devices A1-A4 of piconet A due to BP overlap, Superframe 1504 represents an exemplary superframe after shifting of beacons of devices B1-B4 of piconet B due to BP overlap. Moreover, superframes 1505 and 1506 represent an exemplary superframe after alignment and contraction of beacons of devices A1-A4 and B1-B4, respectively, to enable merger of piconet B into piconet A.

Each superframe 1501-1506 includes at least a BP at the beginning of the respective superframe 1501-1506 and corresponding DRP reservations thereafter. When the BP of piconet A and alien BP are mutually completely overlapped, devices A1-A4 and B1-B4 in piconets A and B receive no alien beacons (during scanning of the entire superframe for mMaxLostBeacons superframes), but may find available beacon slots in their respective BPs from the highest-numbered occupied beacon slot to the maximum length (mMaxBPLength).

When the BP of piconet A and alien BP are mutually completely overlapped, in step 822, devices in respective piconets A and B immediately choose new beacon slots among available ones. In step 824, the devices in piconets A and B save the DRP reservations. In step 826, piconets A and B merge by aligning their BPSTs. In step 828, the one piconet contracts the merged BP.

The merging procedure includes, if the BPST of a device falls within an alien BP, relocating its beacon to the alien BP. The device relocates its beacon by: (i) changing its BPST to the BPST of the alien BP; (ii) adjusting its beacon slot number such that a new beacon slot number is an existing beacon slot number plus a longest detected alien BP length or following normal BP joining rules to relocate its beacon to the alien BP; and (iii) terminating sending beacons in its previous BP.

Although merger of piconets A and B is illustrated for only BP's which are identical in length, it is contemplated that the same merger procedure may be used where the BP lengths of superframes, for example 1601 and 1602 of Fig. 16, differ by only one BP slot.

Referring to FIGS. 17A-17C, piconet A includes superframe 1701 and piconet B includes superframe 1702. Superframe 1703 represents an exemplary superframe after shifting of the BP of piconet A due to complete BP overlap with the DRP reservation of superframe 1702. Superframe 1704 represents an exemplary superframe after shifting of the BP of piconet B due to complete BP overlap with the DRP reservation of superframe 1701. Moreover, superframes 1705 and 1706 represent exemplary superframes after alignment and contraction of BPs of piconets A and B to enable merging of piconets A and B.

Referring back to Fig. 8B, when the BP of piconet A is overlapped by the end of DRP reservation of piconet B and the BP of piconet B is overlapped by the end of DRP reservation of piconet A, step 820 proceeds to step 830. In this case, a high numbered beacon slots (i.e., from the highest overlapped slot plus one to mMaxBPLength) remain available, as shown in Fig. 17A. In step 830, devices in piconets A and B shift their beacons to available slots(as shown in Fig. 17B). In step 832, the devices in the piconets A and B save their DRP reservation. In step 834, piconets A and B merge the BP of one piconet into the other piconet (as shown in Fig. 17C). If the BPST of piconet B occurs during the first half of superframe 1703 of piconet A, then piconet A merges into piconet B.

FIGS. 18A-18B are timing charts illustrating a superframe of an exemplary piconet with corresponding noise periods. Piconet B includes superframe 1801 and stable noise occurs during the complete BP of piconet B. Superframe 1802 represents an exemplary superframe after shifting of the BP of piconet B due to complete BP overlap with this stable noise. Referring back to Fig. 8B, if the BP of piconet B is overlapped by this stable noise, step 820 proceeds to step 836. The stable noise may include, for example, a BP or a DRP of another piconet in the communication range of piconet B but not close enough to be received by piconet B. In this case, a high numbered beacon slots (i.e., from the highest overlapped slot plus one to mMaxBPLength) remain available; as shown in Fig. 18A. In step 836, devices in piconet B shift their beacons out of the affected (overlapped) region. In step 838 the devices in piconet B save DRP reservation. Moreover, in such a case the merging time is extended because of possible collisions with beacon shifting. In step 842, the DRP is terminated after receiving mMaxDRPSurvive beacons where mMaxDRPSurvive may desirably be set to not less than (2*mMaxLostBeacons +1).

BP Merging for a Partially Overlapped BP

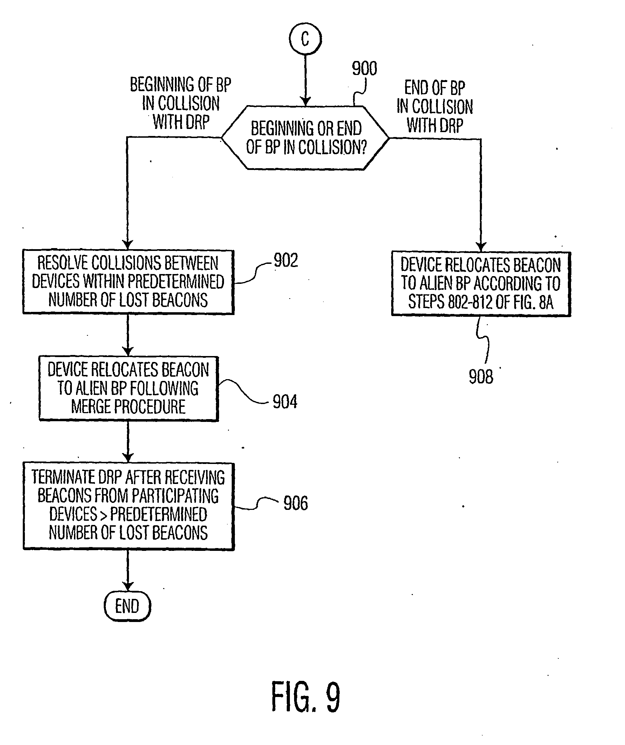

Referring back to Fig. 7, in step 708 it is determined whether all devices are involved in a collision. If not all devices are involved in the collision, step 708 proceeds to step 712. If all devices are involved in collision, step 708 proceeds to step 710. In step 710, it is determined whether data from devices involved in the collision can be received within or outside of the BP. Processing then proceeds to Fig. 9.

It is contemplated, for example: (1) that in certain cases not all BPs are well formed, and thus not all beacons in piconets A and B are in collision, (2) that in other cases only the beginning or the end of a BP encounters overlapping. The BP of a piconet, for example piconet A, is partially overlapped. Beacons of some devices' may be correctly received by neighboring devices (i.e., other devices on piconet A). Sources of partial overlapping may include overlap of either BPs or DRPs of an alien piconet B.

FIGS. 19A and 19B are timing charts illustrating collision resolution according to the current MBOA MAC specification. Piconet A includes a BP of superframe 1901 and piconet B includes a BP of superframe 1902. Superframe 1903 represents an exemplary superframe after merging of devices B1 and B2 of the BP of piconet A. In piconets A and B not all devices are involved in collisions. Devices B1 and B2 may receive correctly some beacons of piconet A, while devices B3 and B4 neither receive beacons nor are their beacons received by devices A1-A4 in piconet A.

According to the current MBOA MAC specification, devices B1 and B2 immediately relocate their beacons to the BP of piconet A. Devices B3 and B4 of piconet B, however, cannot relocate because they cannot receive beacons of piconet A. If devices B1 and B2 shift (merge into piconet A) while devices B3 and B4 do not, collisions among B1, B2, B3 and B4 occur and DRP connection between devices B1, B2, B3 and B4 may be lost. The current MBOA MAC specification does not provide rules for relocating devices B3 and B4 and they may become isolated.

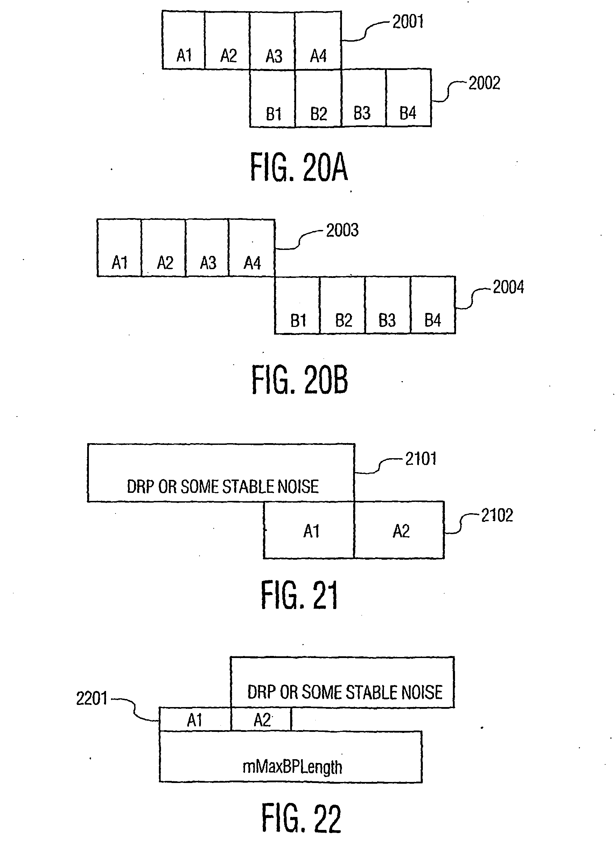

FIGS. 20A and 20B are timing charts illustrating collision resolution according to a further embodiment of the present invention for exemplary piconets A and B. Piconet A includes the BP of superframe 2001 and piconet B includes the BP of superframe 2002. Superframes 2003 and 2004 represent exemplary superframes after shifting of devices B1, B2, B3 and B4 of the BP of piconet B to prevent overlap of the BPs of superframes 2001 and 2002. Not all devices are involved in collisions between piconets A and B. Devices B1 and B2 can correctly receive some beacons of piconet A, while devices B3 and B4 neither receive beacons nor are their beacons received by devices A1-A4 in piconet A.

Referring back to Fig. 7, if not all devices in both piconets are involved in the collision, step 708 proceeds to step 712. In step 712, when a device in piconet A does not receive either neighboring device beacons or alien device beacons within the BP of piconet A, the device may desirably keep scanning up to the end of the superframe and for an additional mMaxLostBeacons-1 superframes for potential alien BPs and upon finding an alien beacon during the extended scanning, the device may perform the BP Switch IE procedure. Accordingly, step 712 follows the steps of 802-812 (Fig. 8A). This may prevent the DRP from early termination and may provide for more stable data connections. That is by using BP Switch IE 500, all devices B1-B4 on piconet B are efficiently merged into piconet A with a reduced merger time.

Referring to Fig. 9, a method for merging piconets having a partially overlapped BP is illustrated, according to an exemplary embodiment of the present invention. In step 900, it is determined whether the beginning or the end of the BP is in collision with a DRP. If the beginning of the BP is in collision with a DRP, step 900 proceeds to step 902. if the end of the BP is in collision with a DRP, step 900 proceeds to step 908.

Fig. 21 is a timing chart illustrating a BP of a superframe corresponding to another superframe's DRP reservation period or, otherwise, stable noise. Piconet A includes the BP of superframe 2101 and either a DRP reservation or, otherwise, stable noise 2102 occurs during a beginning portion of the BP of piconet A. That is, for example, the BP of piconet A may be partially overlapped by this stable noise, which could include the BP or the DRP of another piconet in the communication range of piconet A but not close enough to be received by piconet A.

When the beginning of the BP of piconet A is overlapped by a DRP or stable noise of another piconet, as shown in Fig. 21, device A2 cannot receive beacons for device A1 but may detect PHY activity. Device A2 may broadcast the collision on this beacon slot in its own beacon via BPOIE, and device A1 may learn that it is involved in a collision.

According to the current MBOA MAC specification, A1 resolves this collision in mMaxLostBeacons superframes. This is a long period of time and may lead to loss of DRP reservations. Referring back to Fig. 9, in step 902, collisions are resolved between devices in piconets A and B in mMaxLostBeacons superframes. In step 904, a device relocates its beacon to an alien BP following the merging procedure described above. In step 906, devices terminate their DRP using mMaxDRPSurvive which is not less than mMaxLostBeacons +1 in order to save the DRP connection of a device, for example device A1.

Fig. 22 is a timing chart illustrating a BP of a superframe corresponding to another superframe's DRP reservation period or, otherwise, stable noise. Piconet A includes the BP of superframe 2201 and either a DRP reservation or, otherwise, stable noise occurs during an ending portion of the BP of piconet A. When the end of the BP of piconet A is overlapped by a DRP or stable noise of another piconet so that all subsequent beacon slots up to mMaxBPLength become polluted, as shown in Fig. 22, device A2 experiences collision and cannot resolve the collision. Referring to Fig.

9, If the end of the BP is in collision with a DRP, step 900 proceeds to step 908. In step 908, the device merges according to steps 802-812 (Fig. 8A). It is desirable for device A2 to scan the entire superframe 2201 (only a part of which is shown) for mMaxLostBeacons superframes and if device A2 receives an alien beacon, it starts a relocation process according to rules related to the BP Switch IE procedure, and transmits its beacon in a signaling slot. If device A1, which is not involved in the collision, receives a beacon with BP Switch IE 500 in the signaling slot 101, device A1 may include into its own beacon a similar BP Switch IE 500. If device A1, which is not involved in the collision, finds a collision in signaling slot 101, device A1 may listen up to mMaxBPLength superframes. If all beacon slots are unavailable, device A1 may scan the entire superframe to find an alien piconet. It is contemplated that a similar procedure may be followed when the end of the BP of one piconet s overlapped by stable noise of another piconet.

Alien BP Discovery

It is desirable that devices monitor beacons from other devices during the entire BP. However, for power saving purpose, devices are not expected to perform scanning beyond the BP. If BPs 403 and 404 (Fig. 4) of piconets A and B do not overlap, devices in piconet A may be unable to receive beacons from piconet B and devices in piconet B, for example may be unable to receive beacons from piconet A. The current MBOA MAC specification provides that a device for which the BPST occurs during a second half of an alien superframe may wait for alien devices to relocate their BPST, but may not relocate its own BPST for some time. That is, when the BPST of piconet A, BPST(A), occurs during the second half of a superframe of a different piconet B that is within communication range of piconet A or is earlier than the BPST of piconet B, merging procedures are completed within mBPMergeWaitTime + mInitialCountDown superframes for the case that piconet A finds piconet B. However, if piconet B finds piconet A but piconet A does not find piconet B, it may take mBPMergeWaitTime + mInitialCountDown + mMaxLostBeacons superframes to complete the merging procedure. This is because piconet B waits mMaxLostBeacons superframes before beginning the merge procedure. Thus, in the current MBOA MAC specification, piconet B is not involved in assisting piconet A to expedite merging. Accordingly, the merging procedure may be improved. More particularly, the current MBOA MAC specification does not cover procedures for BP overlap discovery. Without BP discovery procedures certain requirements of the communication system may not be met including for example DRP connectivity loss in certain situations.

The simplest solution to the problem of how to discovery alien BPs overlap is to scan for beacons always (i.e., for each entire superframe.) Unfortunately, this solution is too energy inefficient to be deployed.

A parameter, mMaxDiscoverTime may be introduced. To reduce power consumption, devices may scan an entire superframe to find an alien piconet. This scanning may occur not all the time, but instead, aperiodically at least every mMaxDiscoverTime superframes. If it is desirable for a device to scan more frequently, a request from an upper-layer protocol may be made to scan more frequently. This may occur, for example, when the device is just powered up, when it change its frequency or it changes its channel number, among others.

If the BPST of piconet B, BPST(B), is in the first half of the superframe of piconet A, eventually, one of the devices from piconet A or B finds (discovers) the other piconet (i.e., the alien piconet). If the device that discovers the alien piconet is from piconet A, devices from piconet A relocate their beacon to the BP of piconet BSP. If, however, the device that discovers the alien piconet is from piconet B, according to the current MBOA specification, devices from piconet B wait for devices on piconet A to start merging for mMaxLostBeacons superframes.

To reduce this waiting time, the device that finds an alien piconet may transmit its beacons into a signal slot of an alien piconet for mMaxLostBeacons superframes. The signal slot may be chosen randomly.

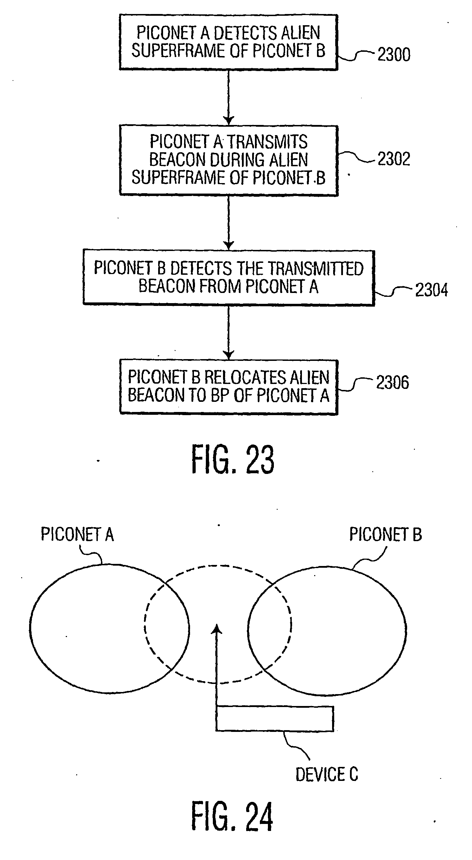

Fig. 23 is a flow chart illustrating a method for alien BP discovery between two piconets, according to an exemplary embodiment of the present invention. In step 2300, piconet A detects an alien superframe of piconet B by scanning an entire superframe periodically. In step 2302, piconet A transmits a beacon during the alien superframe of piconet B.

In step 2304, piconet B detects the transmitted beacon from piconet A. Piconet B may also scan an entire superframe periodically so that piconet A may have transmitted a number of beacons prior to piconet B detecting the transmitted beacon. In step 2306, piconet B relocates its alien beacon to the BP of piconet A in order to merge into one piconet.

If a device (i.e. piconet B) receives an alien beacon in its signal slot, it may listen to the entire superframe to complete the merging procedure or until the alien piconet moves out of range during the merge procedure. The device may consider that the alien piconet has gone out of range if it receives no alien beacons for at least mMaxLostBeacons superframes. Such a procedure may reduce power consumption of both piconets A and B because the devices on the piconets A and B do not listen all the time for the entire superframe to find neighboring piconets. The procedure may also reduce a merging time and thus may improve the merging process.

BP Association

Fig. 24 is a schematic diagram illustrating a communication device positioned between two independent exemplary piconets A and B. A device C1 may switch on and may find piconets A and B that are far away enough (i.e., out of communication range) from each other and operate independently from each other. Device C1 needs to decide which piconet A or B to join and how to choose a beacon slot for the selected piconet A or B. Because device C1 is within communication range (i.e., the outer perimeter of its communication range is illustrated by dotted line 501 and portions fall within the communication area of piconets A and B) of both piconets A and B, piconets A and B may be linked through device C1 resulting in a single larger piconet A:B. The current MBOA MAC specification does not define rules to resolve such a situation.

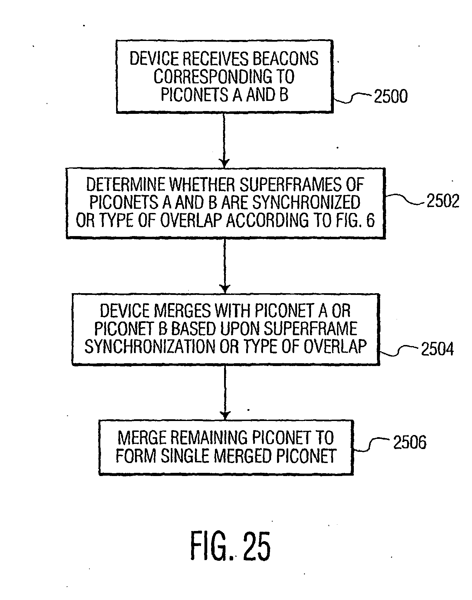

The current MBOA MAC specification requests that when multiple piconets are in communication range of one another, all piconets merge into one piconet. Fig. 25 is a flow chart illustrating a method for BP association of a device positioned between two independent piconets, according to an exemplary embodiment of the present invention. In step 2500, device C1 receives beacons corresponding to piconets A and B. In step 2502, the steps of Fig. 6 are used to determine whether superframes of piconets A and B are synchronized and, if the BP is overlapped, the type of overlap.

In step 2504, device C1 merges with piconet A or B based upon the synchronization or the type of overlap. For example, device C1 may join piconet A, if: (1) the BPs of piconet A and B are overlapped and the BPST of piconet B occurs during the BP of piconet A, or (2) the BPs of piconet A and B are not overlapped and the BPST of piconet A occurs during the first half of the superframe of piconet B.

In step 2506, the remaining piconet is merged to form one piconet. For example, after device C1 joins piconet A, piconets A and B become connected indirectly via device C1. Piconets A and B merge into piconet A. If device C1 joins piconet A, an efficiency is improved because device C1 does not have to shift its beacons in the following BP merge. This reduces the overall merging process by joining device C1 to piconet A which ultimately becomes one single piconet. Under other procedures, device C1 may have to shift its beacon in the BP merging.

Moreover device C1 desirably may choose the beacon slot after the HNUBS+Offset slot, where HNUBS is the Highest-Numbered Unavailable Beacon Slot observed in piconet A and Offset is the number of beacon slots covering the difference between the BPST(A) and the BPST(B), that is:

$$Offset = ceil\{ (BPST(B)-BPST(A))/mBeaconSlotLength \},$$

where ceil(x) is the smallest integer not less than x. In other words, device C1 may choose the beacon slot after the highest beacon slot, where it observes PHY activity in the latest superframe.

It should be understood that the method illustrated may be implemented in hardware, software, or a combination thereof. In such embodiments, the various components and steps described below may be implemented in hardware and/or software.

Although the invention has been described in terms of a communication system, it is contemplated that the it may be implemented in software on microprocessors/general purpose computers (not shown). In this embodiment, one or more of the functions of the various components may be implemented in software that controls a general purpose computer. This software may be embodied in a computer readable carrier, for example, a magnetic or optical disk, a memory-card or an audio frequency, radio-frequency, or optical carrier wave.

In addition, although the invention is illustrated and described herein with reference to specific embodiments, the invention is not intended to be limited to the details shown. Rather, various modifications may be made in the details within the scope and range of equivalents of the claims and without departing from the invention

**Claims**

1. A method for synchronizing communications between first and second piconets,
   wherein the piconet is a peer-to-peer wireless personal area network, WPAN, having no central controller, wherein every device transmits its own beacon in a beacon period of the superframes of the piconet, the method comprising the steps of:

   a) detecting (600) beacons from the first and second piconets;
   b) determining (602) whether superframes corresponding to the first and second piconets are synchronized according to respective beacon period start times from the detected beacons; **characterized in that** the method further comprises the steps of

c) when the superframes corresponding to the first and second piconets are not synchronized, determining (608) a type of overlap corresponding to 1) an overlap between beacon periods, 2) an overlap between reservation periods and 3) an overlap between beacon periods and reservation periods of the superframes corresponding to the first and second piconets, wherein the reservation period is a reserved period out of periods used to communicate with one or more other devices; and

d) merging (610) the first and second piconets into a merged piconet according to rules based on the determined type of overlap.

2. The method according to claim 1, further comprising the step of terminating the reservation periods of the superframes corresponding to the first and second piconets when a number of lost beacons is greater than a predetermined number of lost beacons.

3. The method according to claim 1, the step of determining the type of overlap further comprises determining (702) whether a degree of the overlap is completely overlapped or partially overlapped, the degree of overlap determined between a beacon period of one piconet from among the first and second piconets and at least one of an alien beacon period and an alien reservation period corresponding to the other piconet from among the first and second piconets; and the step of merging the first and second piconets further comprises merging the first and second piconets into the merged piconet according to rules based on the determined type of overlap and the determined degree of the overlap.

4. The method according to claim 3, wherein when the degree of the overlap is determined to be completely overlapped, the step of merging the first and second piconets further includes the steps of:

detecting (704) for the presence of an alien beacon corresponding to the other piconet;

when the alien beacon is detected by the one piconet, including (806) a predetermined merging parameter in a beacon of the one piconet prior to relocating (808) the beacon of the one piconet to the alien beacon period of the other piconet, whereby the predetermined merging parameter notifies devices in the one piconet that the one piconet is merging with the other piconet; and

when the alien beacon is not detected by the one piconet and a predetermined number of slots in the superframes corresponding to the one piconet are available, saving reservation period information associated with the first and second piconets prior to merging the first and second piconets into the merged piconet.

5. The method according to claim 3, wherein when the degree of the overlap is determined to be partially overlapped, the step of merging the first and second piconets further comprises the steps of:

determining (708) whether all devices in the one piconet are involved in a collision with the other piconet;

when all devices in the one piconet are determined not to be involved in the collision, including (806) a predetermined merging parameter in a beacon of the one piconet prior to relocating (808) the beacon of the one piconet to the alien beacon period of the other piconet, whereby the merging parameter notifies the devices in the one piconet that the one piconet is merging with the other piconet; and

when all devices in the one piconet are determined to be involved in the collision, 1) resolving (902) the collision between the devices in the one piconet and the other piconet within a predetermined number of lost beacons and 2) terminating (906) the reservation periods of the superframes corresponding to the first and second piconets when the number of lost beacons is greater than the predetermined number of lost beacons prior to merging the first and second piconets into the merged piconet.

6. The method according to claim 1, wherein a device is associated with a first piconet or a second piconet wherein:

in step a) beacons are detected (2500) by the device corresponding to the first piconet and the second piconet;

in step d) the device and the first piconet or the second piconet are merged (2504) to form a first merged piconet based on whether the corresponding superframes are synchronized or the type of overlap; and

remaining devices of the unmerged piconet of the first piconet and the second piconet are merged (2506) into the first merged piconet to form a second merged piconet.

7. The method according to claim 6, wherein when the superframes corresponding to the first and second piconets are not synchronized, the step of merging the device and the first piconet or the second piconet further comprises the steps of: detecting (604) whether beacon periods corresponding to the first piconet and the second piconet overlap; when the beacon periods overlap, detecting a highest beacon slot where physical activity is observed and selecting a signal slot in the first piconet or the second piconet greater than the highest beacon slot where the physical activity is observed.

8. A computer readable carrier including computer program instructions that cause a computer to perform all steps of the method according to any of claims 1 or 6.

9. A device configured to be associated with a first piconet or a second piconet, wherein the piconet is a peer-to-peer wireless personal area network, WPAN, having no central controller, wherein every device transmits its own beacon in a beacon period of the superframe of the piconet, the device comprising:

means for detecting (2500) beacons corresponding to the first piconet and the second piconet; means for determining (2502) whether superframes corresponding to the first and second piconets are synchronized according to respective beacon period start times from the detected beacons;

**characterized in that** the device further comprising

means for determining (608) a type of overlap when the superframes corresponding to the first and second piconets are not synchronized, the type of overlap corresponding to 1) an overlap between beacon periods, 2) an overlap between reservation periods and 3) an overlap between beacon periods and reservation periods of the superframes corresponding to the first and second piconets, wherein the reservation period is a reserved period out of periods used to communicate with one or more other devices;

means for merging (2504) the device and the first piconet or the second piconet to form a first merged piconet based on whether the corresponding superframes are synchronized or the type of overlap and merging (2506) the remaining devices of the unmerged piconet of the first piconet and the second piconet into the first merged piconet to form a second piconet.

**Patentansprüche**

1. Verfahren zum Synchronisieren von Kommunikationsvorgängen zwischen einem ersten und einem zweiten Piconet, wobei das Piconet ein drahtloses Peer-to-Peer-Personenbereichsnetz oder Peer-to-Peer-WPAN ist, das keinen zentralen Controller besitzt, wobei jede Vorrichtung ihre eigene Bake in einer Bakenperiode des Mehrfachrahmens des Piconets sendet, wobei das Verfahren die folgenden Schritte umfasst:

a) Detektieren (600) von Baken von dem ersten und den zweiten Piconet;

b) Bestimmen (602), ob Mehrfachrahmen, die dem ersten und dem zweiten Piconet entsprechen, synchronisiert sind, in Übereinstimmung mit den jeweiligen Bakenperioden-Startzeiten aus den detektierten Baken;

**dadurch gekennzeichnet, dass** das Verfahren ferner die folgenden Schritte umfasst:

c) wenn die dem ersten und dem zweiten Piconet entsprechenden Mehrfachrahmen nicht synchronisiert sind, Bestimmen (608) eines Überlappungstyps, der 1) einer Überlappung zwischen Bakenperioden, 2) einer Überlappung zwischen Reservierungsperioden und 3) einer Überlappung zwischen Bakenperioden und Reservierungsperioden der dem ersten und dem zweiten Piconet entsprechenden Mehrfachrahmen entspricht, wobei die Reservierungsperiode eine reservierte Periode unter den für die Kommunikation mit einer oder mit mehreren anderen Vorrichtungen verwendeten Perioden ist; und

d) Zusammenführen (610) des ersten und des zweiten Piconets zu einem zusammengeführten Piconet in Übereinstimmung mit Regeln, die auf dem bestimmten Überlappungstyp beruhen.

2. Verfahren nach Anspruch 1, das ferner den Schritt des Beendens der Reservierungsperioden der dem ersten und dem zweiten Piconet entsprechenden Mehrfachrahmen umfasst, wenn die Anzahl verlorener Baken größer als eine vorgegebene Anzahl verlorener Baken ist.

3. Verfahren nach Anspruch 1, wobei der Schritt des Bestimmens des Überlappungstyps ferner das Bestimmen (702), ob ein Überlappungsgrad eine vollständige Überlappung oder eine teilweise Überlappung ist, umfasst, wobei der Überlappungsgrad zwischen einer Bakenperiode eines Piconets des ersten und des zweiten Piconets und wenigstens einer fremden Bakenperiode und einer fremden Reservierungsperiode, die dem anderen Piconet des ersten und des zweiten Piconets entsprechen, bestimmt wird; und

der Schritt des Zusammenführens des ersten und des zweiten Piconets ferner das Zusammenführen des ersten und des zweiten Piconets zu dem zusammengeführten Piconet in Übereinstimmung mit Regeln, die auf dem bestimmten Überlappungstyp und den bestimmen Überlappungsgrad beruhen, umfasst.

4. Verfahren nach Anspruch 3, wobei dann, wenn der Überlappungsgrad als vollständige Überlappung bestimmt wird, der Schritt des Zusammenführens des ersten und des zweiten Piconets ferner die folgenden Schritte umfasst:

Detektieren (704) des Vorhandenseins einer fremden Bake, die dem anderen Piconet entspricht;
wenn die fremde Bake durch das eine Piconet detektiert wird, Aufnehmen (806) eines vorgegebenen Zusammenführungsparameters in eine Bake des einen Piconets, bevor die Bake des einen Piconets in die fremde Bakenperiode des anderen Piconets verlagert (808) wird, wobei der vorgegebene Zusammenführungsparameter an Vorrichtungen in dem einen Piconet meldet, dass das eine Piconet mit dem anderen Piconet zusammengeführt wird; und
wenn die fremde Bake durch das eine Piconet nicht detektiert wird und eine vorgegebene Anzahl von Schlitzen in den Mehrfachrahmen, die dem einen Piconet entsprechen, verfügbar ist, Sichern von Reservierungsperiodeninformationen, die dem ersten und dem zweiten Piconet zugeordnet sind, bevor das erste und das zweite Piconet zu dem zusammengeführten Piconet zusammengeführt werden.

5. Verfahren nach Anspruch 3, wobei dann, wenn der Überlappungsgrad als teilweise Überlappung bestimmt wird, der Schritt des Zusammenführens des ersten und des zweiten Piconets ferner die folgenden Schritte umfasst:

Bestimmen (708), ob alle Vorrichtungen in dem einen Piconet an einer Kollision mit dem anderen Piconet beteiligt sind;
wenn für alle Vorrichtungen in dem einen Piconet bestimmt wird, dass sie nicht an der Kollision beteiligt sind, Aufnehmen (806) eines vorgegebenen Zusammenführungsparameters in eine Bake des einen Piconets, bevor die Bake des einen Piconets in die fremde Bakenperiode des anderen Piconets verlagert wird (808), wobei der Zusammenführungsparameter den Vorrichtungen in dem einen Piconet meldet, dass das eine Piconet mit dem anderen Piconet zusammengeführt wird; und
wenn für alle Vorrichtungen in dem einen Piconet bestimmt wird, dass sie an der Kollision beteiligt sind, 1) Auflösen (902) der Kollision zwischen den Vorrichtungen in dem einen Piconet und in dem anderen Piconet innerhalb einer vorgegebenen Anzahl verlorener Baken und 2) Beenden (906) der Reservierungsperioden der Mehrfachrahmen, die dem einen und dem anderen Piconet entsprechen, wenn die Anzahl verlorener Baken größer ist als die vorgegebene Anzahl verlorener Baken, bevor das erste und das zweite Piconet zu dem zusammengeführten Piconet zusammengeführt werden.

6. Verfahren nach Anspruch 1, wobei eine Vorrichtung einem ersten Piconet oder einem zweiten Piconet zugeordnet ist, wobei

im Schritt a) Baken, die dem ersten Piconet und dem zweiten Piconet entsprechen, durch die Vorrichtung detektiert werden (2500);
im Schritt d) die Vorrichtung und das erste Piconet oder das zweite Piconet anhand der Tatsache, ob die entsprechenden Mehrfachrahmen synchronisiert sind, oder anhand des Überlappungstyps zusammengeführt werden (2504), um ein erstes zusammengeführtes Piconet zu bilden; und
verbleibende Vorrichtungen des nicht zusammengeführten Piconets des ersten und des zweiten Piconets zu dem ersten zusammengeführten Piconet zusammengeführt werden (2506), um ein zweites zusammengeführtes Piconet zu bilden.

7. Verfahren nach Anspruch 6, wobei dann, wenn die dem ersten und dem zweiten Piconet entsprechenden Mehrfachrahmen nicht synchronisiert sind, der Schritt des Zusammenführens der Vorrichtung und des ersten Piconets oder des zweiten Piconets ferner die folgenden Schritte umfasst: Detektieren (604), ob Bakenperioden, die dem ersten Piconet und dem zweiten Piconet entsprechen, überlappen; wenn die Bakenperioden überlappen, Detektieren eines höchsten Bakenschlitzes, in dem eine physikalische Aktivität beobachtet wird, und Auswählen eines Signalschlitzes in dem ersten Piconet oder dem zweiten Piconet, der größer ist als der höchste Bakenschlitz, in dem die physikalische Aktivität beobachtet wird.

8. Computerlesbarer Träger, der Computerprogrammbefehle enthält, die einen Computer dazu veranlassen, alle Schritte des Verfahrens nach einem der Ansprüche 1 bis 6 auszuführen.

9. Vorrichtung, die konfiguriert ist, um einem ersten oder einem zweiten Piconet zugeordnet zu werden, wobei das Piconet ein drahtloses Peer-to-Peer-Personenbereichsnetz oder Peer-to-Peer-WPAN ist, das keinen zentralen Controller besitzt, wobei jede Vorrichtung ihre eigene Bake in einer Bakenperiode des Mehrfachrahmens des Piconets sendet, wobei die Vorrichtung umfasst:

Mittel, um Baken, die dem ersten Piconet und dem zweiten Piconet entsprechen, zu detektieren (2500);
Mittel, um zu bestimmen (2502), ob Mehrfachrahmen, die dem ersten und dem zweiten Piconet entsprechen, synchronisiert sind, entsprechend den jeweiligen Bakenperioden-Startzeiten aus detektierten Baken;

**dadurch gekennzeichnet, dass** die Vorrichtung ferner umfasst:

Mittel, um einen Überlappungstyp zu bestimmen (608), wenn die dem ersten und dem zweiten Piconet entsprechenden Mehrfachrahmen nicht synchronisiert sind, wobei der Überlappungstyp 1) einer Überlappung zwischen Bakenperioden, 2) einer Überlappung zwischen Reservierungsperioden und 3) einer Überlappung zwischen Bakenperioden und Reservierungsperioden der dem ersten und dem zweiten Piconet entsprechenden Mehrfachrahmen entspricht, wobei die Reservierungsperiode eine reservierte Periode unter den für die Kommunikation mit einer oder mit mehreren anderen Vorrichtungen verwendeten Perioden ist; und
Mittel, um die Vorrichtung und das erste Piconet oder das zweite Piconet anhand der Tatsache, ob die entsprechenden Mehrfachrahmen synchronisiert sind, oder anhand des Überlappungstyps zusammenzuführen (2504), um ein erstes zusammengeführtes Piconet zu bilden, und Zusammenführen (2506) der verbleibenden Vorrichtungen des nicht zusammengeführten Piconets des ersten Piconets und des zweiten Piconets zu dem ersten zusammengeführten Piconet, um ein zweites Piconet zu bilden.

## Revendications

1. Procédé pour la synchronisation de communications entre des premier et deuxième pico-réseaux, où le pico-réseau est un réseau personnel sans fil poste à poste, WPAN, n'ayant pas d'unité de commande centrale, où chaque dispositif transmet sa propre balise dans une période de balise de la supertrame du pico-réseau, le procédé comprenant les étapes qui consistent à :

   a) détecter (600) les balises des premier et deuxième pico-réseaux ;
   b) déterminer (602) si des supertrames correspondant aux premier et deuxième pico-réseaux sont synchronisées selon les temps de débuts des périodes de balises respectives des balises détectées ;
   **caractérisé en ce que** le procédé comprend en plus les étapes qui consistent à :
   c) lorsque les supertrames correspondant aux premier et deuxième pico-réseaux ne sont pas synchronisées, déterminer (608) un type de chevauchement correspondant à 1) un chevauchement entre des périodes de balises, 2) un chevauchement entre des périodes de réservation et 3) un chevauchement entre des périodes de balises et des périodes de réservation des supertrames correspondant aux premier et deuxième pico-réseaux, où la période de réservation est une période réservée parmi des périodes utilisées pour communiquer avec un ou plusieurs autres dispositifs ; et
   d) fusionner (610) les premier et deuxième pico-réseaux dans un pico-réseau fusionné selon des règles sur la base du type de chevauchement déterminé.

2. Procédé selon la revendication 1, comprenant en plus l'étape qui consiste à terminer les périodes de réservation des supertrames correspondant aux premier et deuxième pico-réseaux lorsqu'un nombre de balises perdues est supérieur à un nombre prédéterminé de balises perdues.

3. Procédé selon la revendication 1, dans lequel l'étape qui consiste à déterminer le type de chevauchement comprend en plus le fait de déterminer (702) si un degré du chevauchement est total ou partiel, le degré de chevauchement déterminé entre une période d'une balise d'un pico-réseau parmi les premier et deuxième pico-réseaux et au moins l'une d'une période d'une balise exogène et d'une période de réservation exogène correspondant à l'autre pico-réseau parmi les premier et deuxième pico-réseaux ; et
   l'étape qui consiste à fusionner les premier et deuxième pico-réseaux comprend en plus la fusion des premier et deuxième pico-réseaux dans le pico-réseau fusionné selon des règles fondées sur le type déterminé du chevauchement et du degré déterminé du chevauchement.

4. Procédé selon la revendication 3, dans lequel, lorsqu'on détermine que le degré du chevauchement est total, l'étape qui consiste à fusionner les premier et deuxième pico-réseaux comprend en plus les étapes qui consistent à :

   détecter (704) la présence d'une balise exogène correspondant à l'autre pico-réseau ;
   lorsque la balise exogène est détectée par le pico-réseau, inclure (806) un paramètre de fusion prédéterminé dans une balise du pico-réseau avant de replacer (808) la balise du pico-réseau à la période de balise exogène de l'autre pico-réseau, de sorte que le paramètre de fusion prédéterminé informe des dispositifs dans le pico-réseau que le pico-réseau est en train de fusionner avec l'autre pico-réseau ; et

lorsque la balise exogène n'est pas détectée par le pico-réseau et un nombre prédéterminé de créneaux dans les supertrames correspondant au pico-réseau sont disponibles, sauvegarder des informations sur la période de réservation associées aux premier et deuxième pico-réseaux avant de fusionner les premier et deuxième pico-réseaux dans le pico-réseau fusionné.

5. Procédé selon la revendication 3, dans lequel, lorsqu'on détermine que le degré du chevauchement est partiel, l'étape qui consiste à fusionner les premier et deuxième pico-réseaux comprend en plus les étapes qui consistent à :

déterminer (708) si tous les dispositifs dans le pico-réseau sont impliqués dans une collision avec l'autre pico-réseau ;

lorsqu'on détermine que tous les dispositifs dans le pico-réseau ne doivent pas être impliqués dans la collision, inclure (806) un paramètre de fusion prédéterminé dans une balise du pico-réseau avant de replacer (808) la balise du pico-réseau à la période de balise exogène de l'autre pico-réseau, de sorte que le paramètre de fusion informe les dispositifs dans le pico-réseau que le pico-réseau est en train de fusionner avec l'autre pico-réseau ; et

lorsqu'on détermine que tous les dispositifs dans le pico-réseau doivent être impliqués dans la collision, 1) résoudre (902) la collision entre les dispositifs dans le pico-réseau et l'autre pico-réseau dans un nombre prédéterminé de balises perdues et 2) terminer (906) les périodes de réservation des supertrames correspondant aux premier et deuxième pico-réseaux lorsque le nombre de balises perdues est supérieur au nombre prédéterminé de balises perdues avant de fusionner les premier et deuxième pico-réseaux dans le pico-réseau fusionné.

6. Procédé selon la revendication 1, dans lequel un dispositif est associé à un premier pico-réseau ou un deuxième pico-réseau, où :

à l'étape a) des balises sont détectées (2500) par le dispositif correspondant au premier pico-réseau et au deuxième pico-réseau ;

à l'étape d) le dispositif et le premier pico-réseau ou le deuxième pico-réseau sont fusionnés (2504) pour former un premier pico-réseau fusionné selon que les supertrames correspondantes sont synchronisées ou sur la base du type de chevauchement; et

les dispositifs restants des pico-réseaux non fusionnés du premier pico-réseau et du deuxième pico-réseau sont fusionnés (2506) dans le premier pico-réseau fusionné pour former un deuxième pico-réseau fusionné.

7. Procédé selon la revendication 6, dans lequel, lorsque les supertrames correspondant aux premier et deuxième pico-réseaux ne sont pas synchronisées, l'étape qui consiste à fusionner le dispositif et le premier pico-réseau ou le deuxième pico-réseau comprend en plus les étapes qui consistent à :

détecter (604) si des périodes de balises correspondant au premier pico-réseau et au deuxième pico-réseau se chevauchent ; lorsque les périodes de balises se chevauchent, détecter le créneau de balise le plus élevé où une activité physique est observée et sélectionner un créneau de signaux dans le premier pico-réseau ou le deuxième pico-réseau plus grand que le créneau de balise le plus élevé où l'activité physique est observée.

8. Support lisible par ordinateur incluant des instructions d'un programme informatique qui amènent l'ordinateur à procéder à toutes les étapes du procédé selon l'une quelconque des revendications 1 ou 6.

9. Dispositif configuré pour être associé à un premier pico-réseau ou un deuxième pico-réseau, dans lequel le pico-réseau est un réseau personnel sans fil poste à poste, WPAN, n'ayant pas d'unité de commande centrale, où chaque dispositif transmet sa propre balise dans une période de balise de la supertrame du pico-réseau, le dispositif comprenant :

un moyen pour détecter (2500) des balises correspondant au premier pico-réseau et au deuxième pico-réseau ;

un moyen pour déterminer (2502) si des supertrames correspondant aux premier et deuxième pico-réseaux sont synchronisées selon des temps de débuts des périodes de balises respectives des balises détectées ;

**caractérisé en ce que** le dispositif comprend en plus

un moyen pour déterminer (608) un type de chevauchement lorsque les supertrames correspondant aux premier et deuxième pico-réseaux ne sont pas synchronisées, le type de chevauchement correspondant à 1) un chevauchement entre des périodes de balises, 2) un chevauchement entre des périodes de réservation et 3) un chevauchement entre des périodes de balises et des périodes de réservation des supertrames correspondant aux premier et deuxième pico-réseaux, où la période de réservation est une période réservée parmi des périodes utilisées pour communiquer avec un ou plusieurs autres dispositifs ;

un moyen pour fusionner (2504) le dispositif et le premier pico-réseau ou le deuxième pico-réseau pour former un premier pico-réseau fusionné selon que les supertrames correspondantes sont synchronisées ou sur la base du type de chevauchement et pour fusionner (2506) les dispositifs restants du pico-réseau non fusionné du premier pico-réseau et du deuxième pico-réseau dans le premier pico-réseau fusionné pour former un deuxième pico-réseau.

FIG. 1
PRIOR ART

FIG. 2A
PRIOR ART

206

CHANGE BPST TO
BPST OF ALIEN BP ⌐210

ADJUST BEACON SLOT NUMBER ⌐212

TERMINATE SENDING
BEACONS IN PREVIOUS BP ⌐214

END

## FIG. 2B
### PRIOR ART

208

INCLUDE DRP IE IN BEACON WITH ⌐216
RESERVATION TYPE SET TO ALIEN BP

YES — ALIEN BEACON RECEIVED
FOR PREDETERMINED TIME? — NO

218

END

220

YES — ALIEN
BEACON
DOES NOT
INCLUDE BP
SWITCH IE? — NO

222

DEVICE RELOCATES
BEACON TO ALIEN BP

END

END

## FIG. 2C
### PRIOR ART

303

BP(A)

301

PICONET A

PICONET B

BP(B)

302

304

**FIG. 3**
PRIOR ART

403

BP(A)

401

PICONET A

PICONET B

BP(B)

402

404

**FIG. 4**
PRIOR ART

500

| OCTETS: 1 | 1 | 1 | 1 | 2 |
|---|---|---|---|---|
| ELEMENT ID | LENGTH = 4 | BP MOVE COUNTDOWN | BEACON SLOT OFFSET | BPST OFFSET |
| 501 | 502 | 503 | 504 | 505 |

FIG. 5
PRIOR ART

EP 1 925 130 B1

FIG. 6

<u>610</u>

```
        ┌──────────────────┐  ╭ 700
        │ DETERMINE DEGREE OF │ ⌐
        │    BP OVERLAP       │
        └──────────────────┘
                 │
                 ▼
   YES      ╱ BP COMPLETELY ╲   NO
  ◄─────────  OVERLAPPED?    ──────►
            ╲               ╱
              ╲           ╱  ╭ 702
                         ⌐

   704
    │
  706  YES  ╱ ALIEN BEACONS ╲  NO
    │  ◄──── DETECTED?        ────►
    │       ╲               ╱
    ▼                          ▼
┌──────────────┐            ( B )
│  DETERMINE   │
│   WHETHER    │                      708
│ ALIEN BEACONS│                       │
│   CAN BE     │           YES  ╱ ALL DEVICES ╲  NO   712
│  RECEIVED    │          ◄──── INVOLVED IN    ────►   │
│  WITHIN OR   │               ╲  COLLISION?  ╱        │
│ OUTSIDE OF BP│                                       ▼
└──────────────┘      710                     ┌──────────┐
        │              │                      │ FOLLOW   │
        ▼              ▼                      │  STEPS   │
      ( A )    ┌──────────────┐               │ 802-812  │
               │ DETERMINE WHETHER│            │ OF FIG. 8A│
               │ BEGINNING OR END │            └──────────┘
               │ OF BP IS IN COLLISION│
               └──────────────┘
                       │
                       ▼
                     ( C )
```

# FIG. 7

FIG. 8A

FIG. 8B

© 900

BEGINNING OF BP
IN COLLISION
WITH DRP

BEGINNING OR END
OF BP IN COLLISION?

END OF BP
IN COLLISION
WITH DRP

RESOLVE COLLISIONS BETWEEN
DEVICES WITHIN PREDETERMINED
NUMBER OF LOST BEACONS ⟋902

DEVICE RELOCATES BEACON
TO ALIEN BP ACCORDING TO
STEPS 802-812 OF FIG. 8A

DEVICE RELOCATES BEACON
TO ALIEN BP FOLLOWING
MERGE PROCEDURE ⟋904

908

TERMINATE DRP AFTER RECEIVING
BEACONS FROM PARTICIPATING
DEVICES > PREDETERMINED
NUMBER OF LOST BEACONS ⟋906

END

FIG. 9

1003    1004                                    1001

PICONET A | BP |   | DRP |   |   |   |   |   |   |   |

PICONET B | DRP |   |   |   | DRP | BP |   |   |   |

1006                              1005              1002

## FIG. 10

A1 | A2 — 1101

B1 | B2 | B3 — 1102

.B1 AND B2 RESOLVE COLLISION    **FIG. 11A**

A1 | A2

B3 | B1 | B2

**FIG. 11B**

.B MERGES INTO A

A1 | A2 | B3 | B1 | B2    **FIG. 11C**

A1          B1

1201                                    1202

A2        B3        B2

FIG. 12

1301

| A1 | A2 |
|----|----|

| B1 | B2 | B3 | | | 1302

A1 AND A2 MERGE IMMEDIATELY

FIG. 13A

| B1 | B2 | B3 | A1 | A2 | 1303

FIG. 13B

1401

B1

1402

A1        A2        B3        B2

FIG. 14

1501

| PICONET A | A1 | A2 | A3 | A4 | | | | | | | | | | | DRP | | | | |
| PICONET B | B1 | B2 | B3 | B4 | | | | | | | | | | | | DRP | | |

DEVICES IN A AND B SHIFT THEIR BEACONS TO AVAILABLE SLOTS,
SAVING DRP RESERVATIONS

1502

## FIG. 15A

1503

| PICONET A | | | | | A2 | | A4 | A3 | | | A1 | | DRP | | | | |
| PICONET B | | | | | B4 | | B2 | B1 | | B3 | | | | DRP | | |

BPST ALIGNMENT AND CONTRACTION OF THE SINGLE BP

1504

## FIG. 15B

1505

| PICONET A | A1 | | A3 | | A4 | A2 | | | | | | | DRP | | | | |
| PICONET B | | B2 | | B4 | | B1 | B3 | | | | | | | DRP | | |

1506

## FIG. 15C

EP 1 925 130 B1

| PICONET A | a1 | a2 | a3 | a4 | | | | | | | | | | | DRP | | | | |

1601

| PICONET B | b1 | B2 | b3 | b4 | b5 | | | | | DRP | | | | | | |

1602

## FIG. 16

1701

| PICONET A | DRP | | | | | BP | | DRP | |
|-----------|-----|---|---|---|---|----|---|-----|---|
| PICONET B | | BP | | | | DRP | | | DRP |

1702

DEVICES IN A AND B SHIFT THEIR BEACONS TO AVAILABLE SLOTS,
SAVING DRP RESERVATIONS

## FIG. 17A

1703

| PICONET A | DRP | | | | | | BP | DRP | |
|-----------|-----|---|---|---|---|---|----|-----|---|
| PICONET B | | | BP | | | DRP | | | DRP |

1704

PICONET A MERGES ITS BP TO PICONET B

## FIG. 17B

1705

| PICONET A | DRP | | BP | | | | | DRP | |
|-----------|-----|---|----|---|---|---|---|-----|---|
| PICONET B | | | BP | | | DRP | | | DRP |

1706

## FIG. 17C

| | NOISE | | | | | | | | |
|---|---|---|---|---|---|---|---|---|---|
| PICONET B | BP | | | | DRP | | | DRP | |

DEVICES IN A SHIFT THEIR BEACONS TO AVAILABLE SLOTS,
SAVING DRP RESERVATIONS

1801

## FIG. 18A

| | NOISE | | | | | | | | |
|---|---|---|---|---|---|---|---|---|---|
| PICONET B | | BP | | | DRP | | | DRP | |

1802

## FIG. 18B

| A1 | A2 | A3 | A4 |
|---|---|---|---|

1901

| | B1 | B2 | B3 | B4 |
|---|---|---|---|---|

1902

## FIG. 19A
### PRIOR ART

| A1 | A2 | A3 | A4 | B1 | B2 |
|---|---|---|---|---|---|

1903

| | | | | B3 | B4 |
|---|---|---|---|---|---|

## FIG. 19B
### PRIOR ART

A1 | A2 | A3 | A4 — 2001

B1 | B2 | B3 | B4 — 2002

## FIG. 20A

A1 | A2 | A3 | A4 — 2003

B1 | B2 | B3 | B4 — 2004

## FIG. 20B

DRP OR SOME STABLE NOISE — 2101

A1 | A2 — 2102

## FIG. 21

DRP OR SOME STABLE NOISE

2201 — A1 | A2

mMaxBPLength

## FIG. 22

PICONET A DETECTS ALIEN
SUPERFRAME OF PICONET B — 2300

↓

PICONET A TRANSMITS
BEACON DURING ALIEN
SUPERFRAME OF PICONET B — 2302

↓

PICONET B DETECTS THE TRANSMITTED
BEACON FROM PICONET A — 2304

↓

PICONET B RELOCATES ALIEN
BEACON TO BP OF PICONET A — 2306

# FIG. 23

PICONET A            PICONET B

DEVICE C

# FIG. 24

DEVICE RECEIVES BEACONS
CORRESPONDING TO
PICONETS A AND B — 2500

DETERMINE WHETHER SUPERFRAMES OF
PICONETS A AND B ARE SYNCHRONIZED
OR TYPE OF OVERLAP ACCORDING TO FIG. 6 — 2502

DEVICE MERGES WITH PICONET A OR
PICONET B BASED UPON SUPERFRAME
SYNCHRONIZATION OR TYPE OF OVERLAP — 2504

MERGE REMAINING PICONET TO
FORM SINGLE MERGED PICONET — 2506

# FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 751366 A